# EUROPÄISCHE PATENTSCHRIFT

(11) **EP 3 712 770 B1**
(45) Veröffentlichungstag und Bekanntmachung des Hinweises auf die Patenterteilung: **29.09.2021**
(21) Anmeldenummer: 20165064.5
(22) Anmeldetag: 23.03.2020
(51) Int. Cl.: G06F 11/00, G06F 11/07, G06F 11/14

(54) **ÜBERWACHUNGSEINHEIT FÜR SICHERHEITSRELEVANTE GRAFISCHE BENUTZEROBERFLÄCHEN**
MONITORING UNIT FOR SAFETY-RELATED GRAPHICAL USER INTERFACES
UNITÉ DE SURVEILLANCE POUR INTERFACES GRAPHIQUES UTILISATEUR RELATIVES À LA SÉCURITÉ

(30) Priorität: 21.03.2019 EP 19164202
(43) Veröffentlichungstag der Anmeldung: 23.09.2020
(73) Patentinhaber: Deuta-Werke GmbH, 51465 Bergisch Gladbach (DE)
(72) Erfinder: Manz, Holger, 51467 Bergisch Gladbach (DE)
(74) Vertreter: Lippert Stachow Patentanwälte Rechtsanwälte

(56) Entgegenhaltungen:
- EP-A1- 2 273 369
- EP-A1- 2 551 787
- DE-A1- 4 332 143

## Beschreibung

Die Erfindung betrifft allgemein grafische Benutzeroberflächen (GUI) in Anwendungen für welche Sicherheit im Sinne von Gefahren- bzw. Betriebssicherheit (Engl. safety) entscheidend ist.

Die Erfindung betrifft insbesondere eine Überwachungseinheit zur sicheren Darstellung von Bilddaten anhand eines als unsicher zu wertenden darstellenden Rechners.

Die Darstellung von Information als Computergrafik ist fehleranfällig. So können z.B. Fehler in jeder einzelnen Komponente des die Grafik generierenden Rechners auftreten, z.B. durch einen defekten Mikroprozessor, im Grafikprozessor, in den einzelnen Speicherbausteinen, in der Spannungsversorgung, insbesondere aber auch durch Software-Fehler im Betriebssystem, in bei der Softwareherstellung verwendeten Bibliotheken und insbesondere der Applikationssoftware, oder auch sonstigen Software-Komponenten, welche die GUI erzeugt bzw. erzeugen.

Es ist bekannt die Sicherheit zu erhöhen, indem die Erzeugung der Bilddaten bzw. Grafik durch zwei unabhängige Kanäle erfolgt, deren Ergebnisse anschließend auf inhaltliche Übereinstimmung geprüft werden. So beschreibt z.B. DE 4 332 143 A ein solches Zweikanal-System für Stellwerke und Betriebsleitstellen, mit zwei unabhängigen Verarbeitungskanälen, welche Prozeßdarstellungen generieren. Nur sofern eine inhaltliche Übereinstimmung gegeben ist, werden der Anzeige bzw. dem Sichtgerät Daten zur Verfügung gestellt, welche die Darstellung eines wahrheitsgetreuen Prozeßabbildes zulassen. Derartige Lösungen erfordern nebst der Hardware für die Prüfung auf inhaltliche Übereinstimmung u.a. eine Verdopplung der darstellenden Hardware.

Eine deutliche Verbesserung bietet die unter dem Markennamen IconTrust® erhältliche Technik zur Darstellung einer sicherheitsrelevanten Information gemäß dem Prinzip aus WO 2011/003872 A1 bzw. dem Patent EP 2 353 089 B1 der Anmelderin, oder auch der Erstanmeldung hierzu in EP 2 273 369 A1. Diese Technik kann die Darstellung sicherer gestalten und ist bspw. für die Sicherheitsstufe SIL-2 oder höher geeignet. Ein erheblicher Vorteil besteht darin, dass im Sinne der Sicherheitstechnik als nicht sicher (nachfolgend kurz unsicher) zu wertende Hardware und Software quasi beliebiger Art und Komplexität dank der Ausrüstung mit einem separaten, sicherheitszertifizierten Überwachungsmodul nachweisbar sicher eingesetzt werden kann.

Eine Weiterentwicklung, welche auch eine sichere Eingabe ermöglicht, wurde im Patent EP 2 551 787 B1 der Anmelderin vorgeschlagen. Auch bei dieser Lösung wird eine Überwachungseinheit zum Überwachen einer grafischen Benutzeroberfläche vorgesehen. Diese umfasst eine Bilddatenschnittstelle zur Verbindung mit einer Bilddatenleitung für rechnergenerierte Bilddaten von einem Rechner an ein Display sowie mindestens eine Rechenkomponente, welche eine Sicherheitsfunktion implementiert. Die Lösung in EP 2 551 787 B1 ermöglicht sichere Eingaben mittels eines Absolut-Eingabegeräts wie z.B. eines kapazitiven Touch.

Eine erste Aufgabe der vorliegenden Erfindung ist es ein weiterentwickeltes Überwachungsmodul gemäß dem Prinzip aus WO 2011/003872 A1 bzw. dem Patent EP 2 353 089 B1 vorzuschlagen, welches im Falle der Darstellung mehrerer sicherheitsrelevanter Informationen eine erhöhte Verfügbarkeit ermöglicht und/oder für die Sicherheitsanforderungsstufe bzw. den Sicherheits-Integritätslevel SIL-3 (Safety Integrity Level, nach IEC 61508/IEC61511) geeignet ist. Diese Aufgabe wird erfindungsgemäss durch die unabhängigen Ansprüche gelöst. Erfindungsgemäss wird vorgeschlagen, dass die Überwachungseinheit eine zweistufige oder ggf. zweikanalige Rechnerarchitektur aufweist mit -einer ersten Rechenkomponente bzw. Rechnerkomponente, welche eingerichtet ist um eingangsseitig rechnergenerierte Bilddaten zu erhalten und abhängig von einer Sicherheitsfunktion zumindest einen Teil der Bilddaten zu modifizieren, die zur Anzeige in einem vorbestimmten Bildbereich bestimmt sind, sowie ausgangsseitig Bilddaten an ein Display auszugeben, und mit -einer zweiten Rechenkomponente bzw. Rechnerkomponente, welche eingerichtet ist um von der ersten Rechnerkomponente ausgegebene Bilddaten zu überprüfen, durch Berechnung eines Prüfcodes für Bilddaten, insbesondere modifizierter Bilddaten, welche zur Anzeige in dem vorbestimmten Bildbereich bestimmt sind.

Diese Lösung erlaubt es anhand der Überwachungseinheit, sicherheitsgerichtete Einblendungen bzw. Hervorhebungen auf sichere Weise in der grafischen Benutzeroberfläche zu erzeugen. Die Einblendungen können insbesondere aber nicht ausschließlich für sichere Eingaben nach dem zweiten Aspekt (s. unten) genutzt werden.

Dabei ist die Überwachungseinheit insbesondere so eingerichtet bzw. konfiguriert, dass sie berechnete Prüfcodes mit jeweils mindestens einem vorgespeicherten Referenzcode vergleicht, insbesondere zwecks Überprüfung einer bestimmungsgemäßen Hervorhebung durch die erste Rechnerkomponente und/oder zwecks Veranlassung einer sicherheitsgerichteten Reaktion.

Die Rechenkomponenten können konfigurierbare Logikeinheiten oder programmierbare Rechnerkomponenten, wie z.B. FPGA, ASIC und/oder Mikrocontroller, sein oder umfassen. Eine Realisierung als logisch getrennte Rechenkomponenten durch eine gemeinsame Hardware, insbesondere in einer integrierten Schaltung liegt ebenfalls im Rahmen der Erfindung.

Diese Überwachungseinheit mit zweistufiger Architektur eignet sich insbesondere aber nicht ausschließlich für ein Verfahren nach dem weiter unten beschriebenen zweiten Aspekt. Sie ist auch für andere Anwendungen vorteilhaft einsetzbar, z.B. zum sicheren Einblenden einer Zustandsanzeige dahingehend, ob ein Bereich überwacht wird oder nicht, zum sicheren Anzeigen vorgegebener Überwachungsbereiche zur reinen Anzeige (ohne Eingabefunktion), zum Sicherstellen, dass als fehlerhaft dargestellte Bereiche zuverlässig aus- oder überblendet oder als fehlerhaft kenntlich gemacht werden usw.

Erfindungsgemäß ist die erste Rechnerkomponente konfiguriert um zu rechnergenerierten Bilddaten, welche zur Anzeige in einem Überwachungsbereich bestimmt sind, einen Prüfcode zu berechnen für einen sicherheitsgerichteten Vergleich mit mindestens einem vorgespeicherten Referenzwert, insbesondere Referenzcode, für den Überwachungsbereich. Dabei ist die erste Rechnerkomponente konfiguriert um zuerst eingangsseitig Prüfcodes zu rechnergenerierten Bilddaten berechnen und daran anschließend in einer zweiten Stufe Bilddaten modifizieren, zur Hervorhebung sicherheitsrelevanter Information und/oder als sicherheitsgerichtete Reaktion in einem Fehlerfall.

In einer Ausführungsform kann vorgesehen sein, dass die erste und zweite Rechnerkomponente unterschiedliche Codier-Verfahren implementieren und/oder durch zwei getrennte integrierte Schaltungen, wie FPGA, ASIC oder dgl., insbesondere unterschiedlicher Bauart d.h. diversitär, implementiert sind - um Anfälligkeit für systematische Fehler durch Diversität zu minimieren.

Die mindestens eine Rechnerkomponente mit Sicherheitsfunktion, insbesondere die erste und zweite Rechnerkomponente, generiert zu ausgewählten Bildbereichen jeweils rechentechnisch Prüfcodes.

Die Rechnerkomponente(n) kann bzw. können mit einer Voter-Anordnung verbunden sein, z.B. mit einem oder mehreren Prozessoren, die zum Vergleich der generierten Prüfcodes mit vorgespeicherten Referenzdaten vorgesehen und eingerichtet ist. Hierbei kann die Voter-Anordnung bevorzugt als zweikanalige Prozessor-Schaltung realisiert sein, bei zwei Rechnerkomponenten vorzugsweise als 2oo2-Voter, wobei auch andere X-out-of-Y Voter-Konzepte, je nach Anforderung an Sicherheit und/oder Verfügbarkeit möglich sind.

Bei Verwendung einer zweiten Rechnerkomponente kann diese ebenfalls hinsichtlich der Bilddatenmodifikation zweikanalig ausgeführt sein, d.h. redundant zur ersten, dies ist jedoch nicht zwingend. Bei Zweikanaligkeit der Rechnerkomponenten kann die zweite zumindest einen Teil der Bilddaten in identischer Weise wie die erste Rechnerkomponente redundant modifizieren. Wenn beide jeweils zu den modifizierten bzw. redundant modifizierten Bilddaten einen entsprechenden ersten bzw. zweiten Prüfcode berechnen können diese durch die die Überwachungseinheit, insbesondere die Voter-Anordnung, zu funktionalen Sicherheit miteinander verglichen werden. Hierdurch kann sichergestellt werden, dass die erste Rechnerkomponente die Bilddaten in der erwarteten Weise bzw. korrekt modifiziert hat, z.B. zur Markierung oder Ausblendung eines sicherheitskritischen Bereichs.

Ungeachtet des ersten oder zweiten Aspekts (s. unten) hat die Überwachungseinheit bevorzugt ein Modul zur sicherheitsgerichteten Kommunikation über eine Bus-Schnittstelle, die somit als Sicherheits-Schnittstelle zur Ausgabe von sicherheitsrelevanten Bedienbefehlen verwendbar ist, z.B. zur Kommunikation nach IEC 61784-3-3 bzw. PROFIsafe-Protokoll, oder dgl.

Ungeachtet des ersten oder zweiten Aspekts kann die Überwachungseinheit, insbesondere durch konfigurierbare oder programmierbare Rechenkomponenten, Logikeinheiten oder Rechnerkomponenten, wie z.B. FPGA und/oder Mikrocontroller, so konfiguriert werden, dass diese zur rechnerimplementierten Durchführung mindestens eines Verfahrensschritts nach einer der weiter oben erläuterten verfahrenstechnischen Ausführungsformen eingerichtet ist. Der Begriff Rechnerkomponente ist vorliegend nicht auf programmierbare Rechner, z.B. Von-Neumann-Rechner, beschränkt, sondern umfasst jegliche Einheit welche in der Lage ist Bilddaten rechentechnisch zu verarbeiten, z.B. auch vorkonfigurierte FPGAs, ASICs und dgl.

Die vorgeschlagene Überwachungseinheit nach dem ersten oder zweiten Aspekt ist besonders geeignet zum Ausrüsten eines Displaygeräts zur Anzeige von Pixelgrafik, insbesondere mit einem TFT-Panel. Hierbei kann die modulartige Überwachungseinheit in das Gerät integriert sein, z.B. unmittelbar am Bilddateneingang. Das Display kann dabei zumindest einen mit der Geräteschnittstelle der Überwachungseinheit verbundenen Anschluss für ein Eingabegerät sowie einen mit dem Bestätigungs-Eingang der Überwachungseinheit verbundenen Anschluss für eine sichere Bestätigungsvorrichtung aufweisen.

Ein gattungsgemäßes Verfahren bzw. System erlaubt auch eine sicherheitsrelevante bzw. sicherheitsgerichtete Eingabe an einer grafischen Benutzeroberfläche (nachfolgend kurz: GUI). Hierbei generiert ein Rechner pixelformatierte Bilddaten für ein Display, die vom Rechner über eine Bilddatenleitung an das Display übertragen werden. Ein Eingabegerät ermöglicht dabei typischerweise das Bedienen der GUI.

Beim Anzeigen einer Benutzeroberfläche am Display wird - zumindest in einem Betriebszustand bzw. Kontext - mindestens ein grafisches Bedienelement angezeigt, dem eine sicherheitsrelevante Funktion zugeordnet ist. Das Bedienelement ist anhand des Eingabegeräts benutzergesteuert selektierbar, z.B. mittels eines Zeigers bzw. Cursors.

Weiterhin ist gattungsgemäß eine Überwachungseinheit bzw. ein Sicherheitsmodul, das vom darstellenden Rechner getrennt ist, mit der Bilddatenleitung verbunden, und liest für eine sicherheitsgerichtete Funktion zumindest Teile der Bilddaten aus. Die Überwachungseinheit ist insbesondere vom darstellenden Rechner signaltechnisch unabhängig bzw. getrennt.

Gemäß dem weiteren, zweiten und unabhängigen Aspekt der Erfindung ist verfahrenstechnisch vorgesehen:
- dass über einen logischen oder physischen Signalpfad bzw. ersten Kanal der Überwachungseinheit Eingabeinformation, insbesondere bildpixelbezogene relative oder absolute Koordinaten, ausgehend vom Eingabegerät zugeführt wird, abhängig von welcher eine Selektion des Bedienelements erkennbar ist;
- dass die Überwachungseinheit zum Empfang einer benutzergesteuerten Bestätigung in Bezug auf die Selektion über einen sicheren Signalpfad, insbesondere einen dedizierten, separaten physischen zweiten Kanal, mit einer Bestätigungsvorrichtung verbunden ist, welche insbesondere als sichere Vorrichtung ausgeführt ist und bevorzugt vom darstellenden Rechner und/oder vom Eingabegerät signaltechnisch unabhängig ist;
- dass die Überwachungseinheit gewährleistet - insbesondere selbst sicherstellt bzw. bewirkt und/oder überprüft - dass eine bzw. jede benutzergesteuerte Selektion des Bedienelements mit Sicherheitsfunktion in denjenigen Bilddaten welche dem Display zugeführt werden erwartungsgemäß bzw. tatsächlich korrekt dargestellt ist; und
- dass die Überwachungseinheit im Fall einer benutzergesteuerten Bestätigung die über den zweiten Kanal empfangen wird innerhalb einer Zeitspanne während der eine zuverlässig, insbesondere auf sichergestellte bzw. überprüfte Weise, dargestellte Selektion des Bedienelements vorliegt, die diesem Bedienelement zugeordnete sicherheitsrelevante Funktion freigibt bzw. auslöst.

Das Auslösen kann dabei insbesondere durch Ausgabe eines entsprechenden Befehls erfolgen, vorzugsweise über einen eigens zur sicheren Kommunikation vorgesehenen dritten Kanal.

Mit der Selektion anhand des Eingabegeräts geht erfindungsgemäß noch keine Betätigung bzw. Bedienung der sicherheitsgerichteten Funktion einher, sondern diese stellt zunächst nur für den Benutzer sichtbar bzw. visuell eine Auswahl des sicherheitsgerichteten Bedienelements dar. Erst mit einer benutzergesteuerten Bestätigung an der zusätzlichen Bestätigungsvorrichtung, welche vorzugsweise unmittelbar mit dem Überwachungsmodul verbunden ist und/oder sicher ausgeführt ist, wird eine Betätigung bzw. Bedienung des Bedienelements tatsächlich ausgelöst, sofern das Modul die erwarteten Voraussetzungen vom Modul entweder als erfüllt geprüft bzw. festgestellt hat, oder selbst sichergestellt hat. Die Voraussetzungen umfassen insbesondere eine erwartungsgemäße bzw. korrekte Wiedergabe der Selektion in den Bilddaten, welche dem Display zugeführt werden.

Das Anzeige- und Bedienkonzept klassischer Rechnerarbeitsplätze kann dabei erhalten bleiben und es können beliebige handelsübliche Eingabegeräte eingesetzt werden. Insbesondere kann erfindungsgemäß ein COTS-(commercial off-the-shelf)-Zeigegerät eingesetzt werden. Bevorzugt werden hierbei gängige indirekte und relative Zeigegeräte für die 2D-Eingabe als Eingabegeräte verwendet, insbesondere eine Computermaus oder aber gleichwertig z.B. ein Trackball, Joystick, Touchpad, Digitizer oder dgl.

Die Sicherheit der Bedienung bzw. Eingabe wird unter anderem durch separate Betätigung an einer zusätzlichen Bestätigungsvorrichtung, z.B. einem mit der Überwachungseinheit verbundenen sicheren Taster, in Verbindung mit der erfindungsgemäß zuverlässig angezeigten Selektion erreicht. Der Benutzer wird somit als Instanz zur Bestätigung der tatsächlich gewollten Eingabe anhand der Bestätigungsvorrichtung eingebunden.

Der erfindungsgemäß vorgeschlagene Ansatz kann daher - anders als in EP 2 551 787 B1 oder DE 20 2015 104 887 U1 - auf eine sichere Eingabe und Ermittlung von Eingabeinformation, insbesondere Absolut-Koordinaten, z.B. durch einen Touchscreen, oder auf direkte Eingabe (per Softkeys) verzichten indem der Eingabevorgang im Wesentlichen in drei Teilschritte aufgetrennt wird, nämlich:
i) von der eigentlichen Betätigung getrennte Erzeugung bzw. Ermittlung der Eingabeinformation, z.B. Selektionskoordinaten;
ii) eine darauf beruhende Anzeige der Selektion bzw. Auswahl des Bedienelements zur Validierung bzw. Bestätigung der Eingabe entsprechend der angezeigten Selektion durch den Benutzer; und
iii) einer anschließenden bzw. nachfolgenden Aktivierung der dem Bedienelement zugeordneten sicherheitsrelevanten Funktion in Abhängigkeit einer Bestätigung anhand der zusätzlichen Bestätigungsvorrichtung durch den Benutzer.

Im Teilschritt i) kann z.B. eine Koordinatenermittlung unter Verwendung einer handelsüblichen Computermaus erfolgen, die als relatives Zeigegerät eine Verschiebung als Koordinatenveränderung (DELTA-Koordinaten) an einen Controller übermittelt. Daraus können, z.B. auf die angezeigte Grafik bezogene, Absolut-Koordinaten aus einer vorherigen Position und der Veränderung bzw. Verschiebung gebildet werden. Um Teilschritt ii) zu realisieren, können z.B. Absolut- Koordinaten in der Überwachungseinheit, d.h. im sichereren Modul, vorgehalten und vorzugsweise durch dieses Modul, z.B. in Form des Mauszeigers, sicher an der den im Modul bekannten Absolut-Koordinaten visualisiert werden. Alternativ oder ergänzend, insbesondere für Positionen bzw. Koordinaten außerhalb von vordefinierten Bildbereichen mit sicherheitsrelevanten Bedienungselementen, kann die Visualisierung auch durch den unsicheren darstellenden Rechner erfolgen. Innerhalb vordefinierter Bildbereichen mit sicherheitsrelevanten Bedienungselementen soll die Visualisierung sicher bzw. zuverlässig an der Position erfolgen, die den im Modul vorgehaltenen Absolut-Koordinaten entspricht. Im Teilschritt iii) kann davon ausgehend der Benutzer bzw. Betrachter die Visualisierung als gültige Selektionsposition für einen sicherheitsrelevanten Bedienungselementen erkennen und validieren bzw. bestätigen, um die gewünschte Bedienung auszulösen. Dies kann in Teilschritt iii) durch Betätigung einer separaten sicheren Bestätigungsvorrichtung, wie z.B. eines Tasters erfolgen. Darauf beruhend kann die Überwachungseinheit bzw. das Modul einen entsprechenden Befehl erzeugen bzw. ausgeben.

Kurz gefasst wird hierbei also eine sicher angezeigte Selektion getrennt von der Betätigung des Bedienelements durch Bestätigung anhand der Bestätigungsvorrichtung. Somit ist eine ggf. aufwendige sichere Ermittlung der Eingabeinformation, z.B. von Absolut-Koordinaten, die mit beliebigen handelsüblichen Eingabegeräten schwer umsetzbar ist, dank der Erfindung nicht erforderlich. Weiterhin ist unerheblich über welchen Kanal, z.B. auch einen unsicheren Kanal, die Eingabeinformation der Überwachungseinheit übermittelt wird. Das unsichere Eingabegerät kann bspw. auch an den unsicheren Rechner angeschlossen sein. Die Eingabeinformation kann bspw. über die Bilddatenleitung ggf. zusammen mit den Bilddaten, z.B. in einem Pixel-Datencontainer gemäß EP 2 353 089 B1, an die Überwachungseinheit übertragen werden.

Auf die Art und Erzeugung der Eingabeinformation kommt es mit der vorgeschlagenen Lösung grundsätzlich nicht an, sodass beliebige Eingabegeräte, insbesondere indirekte und/oder relative COTS-Zeigegeräte, verwendbar sind.

Bevorzugt wird - im Gegensatz zur Lehre aus EP 2 551 787 B1 und DE 20 2015 104 887 U1 - insbesondere ein Zeigegerät (Engl. pointing device) eingesetzt, welches zur relativen und kontinuierlichen Eingabe geeignet ist, insbesondere ein indirektes Zeigegerät für die 2D-Eingabe. Dabei kann ein handelsübliches bzw. COTS-Peripheriegerät, insbesondere eine Computer-Maus verwendet werden. Derartige Geräte erlauben eine intuitive Zeiger- bzw. Cursorführung in der GUI. Dementsprechend wird die relative, durch das Zeigegerät aufgenommene Bewegung übersetzt und, insbesondere relativ zur Auflösung des Displays, übersetzt in eine Zeigerbewegung bzw. in Bildkoordinaten.

Die vom Eingabegerät, insbesondere vom Zeigegerät, abhängige Eingabeinformation kann der Überwachungseinheit über eine beliebige Schnittstelle zugeführt werden. Die Übermittlung an die Überwachungseinheit kann insbesondere unmittelbar vom Eingabegerät - wenn dieses an die Überwachungseinheit, insbesondere eine Controller-Komponente der Überwachungseinheit angeschlossen ist - oder mittelbar vom Rechner, z.B. einem Desktop-PC mit angeschlossener Computermaus, erfolgen.

Die Selektion bzw. Visualisierung kann beispielsweise durch einen anhand der Überwachungseinheit eingeblendeten Mauszeiger oder andersartiges visuelles Kenntlichmachen, z.B. durch die farbliche Umrahmung oder Farbveränderung des ausgewählten Bedienelements, durch die Überwachungseinheit bzw. das Modul erfolgen.

Die Überwachungseinheit kann eine anschließende Eingabevalidierung bzw. Bestätigung durch den Benutzer betreffend das, z.B. durch die Überwachungseinheit visuell hervorgehobene, sicherheitskritische Bedienelement erfassen zwecks davon abhängiger Ausgabe eines Bedienbefehls entsprechend dem sicherheitskritischen Bedienelement bzw. dessen bestimmungsgemäßer Funktion in der GUI.

In einer bevorzugten Ausführungsform wird durch die Überwachungseinheit selbst sichergestellt, dass eine erkannte Selektion des Bedienelements korrekt in dem Display zugeführten Bilddaten dargestellt ist. Dies kann erzielt werden indem die Überwachungseinheit zumindest einen Teil der Bilddaten modifiziert, die zur Anzeige in einem vorbestimmten Bildbereich bestimmt sind, welcher dem Bedienelement zugeordnet ist, und die Überwachungseinheit entsprechend modifizierte Bilddaten an das Display weiterleitet. Die Modifikation kann dabei z.B. eine Zeigerdarstellung durch die Überwachungseinheit beinhalten bzw. die von dieser modifizierten Bilddaten stellen einen Zeiger positionsabhängig von der Eingabeinformation dar, die aktuell der Überwachungseinheit zugeführt wird. Die Modifizierung kann ergänzend oder alternativ eine visuelle Hervorhebung bzw. visuelles Kenntlichmachen der Selektion für den Benutzer, insbesondere in einem dem jeweiligen Bedienelement zugeordneten vorbestimmten Bildbereich, am Display bewirken.

Die Bilddaten können insbesondere digitale Bilddaten für eine pixelformatierte Darstellung sein.

Es kann insbesondere vorgesehen sein, dass durch die Überwachungseinheit modifizierte Bilddaten rechnergenerierte Bilddaten nur bereichsweise überblenden, insbesondere in einem vergleichsweise kleineren Bildbereich bezogen auf die gesamte grafische Benutzeroberfläche, d.h. dass die GUI-Darstellung zumindest überwiegend vom darstellenden Rechner erzeugt wird.

Alternativ zum Sicherstellen der korrekten Selektionsanzeige durch Bildveränderung anhand der Überwachungseinheit selbst kann vorgesehen werden, dass vom darstellenden Rechner generierte Bilddaten eine Selektion des Bedienelements darstellen. In diesem Fall ist insbesondere vorgesehen, dass die Überwachungseinheit überprüft, dass erkannte Selektion eines Bedienelements jeweils korrekt in dem Display zugeführten Bilddaten dargestellt ist. Dies kann erreicht werden indem die Überwachungseinheit für Bilddaten, die zur Anzeige in einem vorbestimmten Bildbereich bestimmt sind, welcher dem Bedienelement zugeordnet ist, einen Prüfcode berechnet und diesen Prüfcode mit mindestens einem vorgespeicherten Referenzcode vergleicht. Hierzu ist z.B. eine Technik nach dem Prinzip aus dem Patent EP 2 353 089 B1 der Anmelderin geeignet.

Für eine einfach zu implementierende Bedienbarkeit der Benutzeroberfläche im darstellenden Rechner und/oder einfache Erkennung der Selektion in der Überwachungseinheit sollte vorgesehen werden, dass - je nachdem ob das konventionelle Eingabegerät unmittelbar an der Überwachungseinheit oder am darstellenden Rechner angeschlossen ist - Eingabeinformation vom Eingabegerät über die Überwachungseinheit an den Rechner übermittelt wird oder über den Rechner an die Überwachungseinheit übermittelt wird. In einer bevorzugten Ausführungsform ist ein konventionelles Eingabegerät, insbesondere eine Computermaus, unmittelbar an die Überwachungseinheit angeschlossen.

Insbesondere in Verbindung mit Bilddatenmodifikation zum Sicherstellen der korrekten Selektionsanzeige durch Bildveränderung anhand der Überwachungseinheit ist wiederum bevorzugt vorgesehen, dass die Überwachungseinheit eine erste Rechnerkomponente umfasst, welcher eingangsseitig, insbesondere vom darstellenden Rechner über die Bilddatenleitung, die rechnergenerierten Bilddaten zugeführt werden, und die erste Rechnerkomponente abhängig von einer Selektion des sicherheitskritischen Bedienelements diese Bilddaten zur visuellen Hervorhebung der Selektion modifiziert und ausgangsseitige Bilddaten, umfassend die ggf. dementsprechend modifizierten Bilddaten, an das Display ausgibt. Dabei kann die Überwachungseinheit ferner eine zweite Rechnerkomponente umfassen, welche zur Überprüfung von ausgangsseitigen Bilddaten der ersten Rechnerkomponente, insbesondere modifizierter Bilddaten, genutzt wird, bspw. zur Bilddatencodierung zwecks Vergleiches rechentechnisch erstellter Codes.

Insbesondere in einer Weiterbildung hierzu kann vorgesehen sein, dass die erste Rechnerkomponente zu rechnergenerierten bzw. eingangsseitigen Bilddaten, welche zur Anzeige im vorbestimmten Bildbereich bestimmt sind, einen Prüfcode erster Stufe berechnet und die Überwachungseinheit diesen Prüfcode erster Stufe mit mindestens einem vorgespeicherten Referenzcode für den vorbestimmten Bildbereich vergleicht, wobei die erste Rechnerkomponente vorzugsweise eingangsseitig in einem ersten Schritt Prüfcodes erster Stufe zu rechnergenerierten Bilddaten berechnet und daran anschließend in einem zweiten Schritt Bilddaten modifiziert.

In einer bzgl. Hardware- und Rechenaufwand effektiven Ausführungsform, welche auch für andere Anwendungen z.B. die Darstellungsüberprüfung modular verwendbar ist, kann vorgesehen sein dass:
- eine bzw. die erste Rechnerkomponente der Überwachungseinheit zu von der ersten Rechnerkomponente modifizierten Bilddaten, welche zur Anzeige im vorbestimmten Bildbereich bestimmt sind, einen ersten Prüfcode zweiter Stufe berechnet;
- eine bzw. die zweite Rechnerkomponente zu ausgangsseitigen Bilddaten der ersten Rechnerkomponente, welche zur Anzeige im vorbestimmten Bildbereich bestimmt sind, einen zweiten Prüfcode zweiter Stufe berechnet; und
- die Überwachungseinheit die so generierten Prüfcodes zweiter Stufe miteinander vergleicht, insbesondere zwecks Überprüfung einer bestimmungsgemäßen Hervorhebung der Selektion durch die erste Rechnerkomponente.

Hierbei können vorzugsweise beide Rechnerkomponenten jeweils einen dritten Prüfcode zu Bilddaten des vorbestimmten Bildbereichs ohne Selektion berechnen, welche die Überwachungseinheit miteinander vergleicht zwecks Überprüfung einer bestimmungsgemäßen Anzeige des Bedienelements vor bzw. ohne die Hervorhebung zur Anzeige der Selektion.

Es kann zur Reduzierung der notwendigen Rechenleistung vorgesehen sein, dass die Rechnerkomponente(n) nur bei einer durch die Überwachungseinheit erkannten Selektion des Bedienelements einen oder mehrere der vorgenannten Prüfcodes berechnet bzw. berechnen.

Entsprechende Prüfcodes können insbesondere zu pixelformatierten Bilddaten für einen vorbestimmten, dem Bedienelement zugeordneten Bildbereich bestimmt werden, welcher z.B. nur teilweise oder vollständig mit dem Anzeigebereich des Bedienelements übereinstimmt. Jedes geeignete Codier-Verfahren, z.B. eine CRC-Berechnung kann hierbei verwendet werden. Es wird insoweit die Lehre aus WO 2011/003872 A1 bzw. dem Patent EP 2 353 089 B1 als bevorzugte Lösung angegeben.

Die erste Rechnerkomponente kann Bilddaten zur visuellen Hervorhebung der Selektion so modifizieren, dass das selektierte Bedienelement in einem von einem nicht selektierten ersten Darstellungszustand visuell unterscheidbaren selektierten zweiten Zustand angezeigt wird, beispielsweise durch Einblendung einer Umrahmung, durch Farbänderung oder dergleichen. Dies verbessert die Ergonomie bzw. vereinfacht die visuelle Erkennung der Selektion für den Benutzer. Auch eine reine Zeigeranzeige über einem Bedienelement wird jedoch bereits als dargestellte Selektion des Bedienelements verstanden. Ein Zeiger kann jedoch, sofern aktuelle Koordinaten mit dem sicherheitsrelevanten Bedienelement übereinstimmen, ausgeblendet und durch eine Einblendung eines visuell erkennbaren selektierten Zustands ersetzt werden.

Grundsätzlich kann in einer Ausführungsform die erste Rechnerkomponente modifizierte Bilddaten in einem Bilddatenstrom zusammen mit rechnergenerierten Bilddaten an das Display ausgeben, dies kann z.B. in einfacher Weise erzielt werden indem auf die Grafik bezogen nur bereichsweise ein Überschreiben bzw. Überlagern der rechnergenerierten Bilddaten vorgenommen wird und die rechnergenerierten Bilddaten ansonsten unverändert bleiben.

Die Überwachungseinheit ist vorzugsweise als Schaltungsmodul mit mindestens einem integrierten Schaltkreis ausgeführt. Sie kann mit der ersten Rechnerkomponente schaltungstechnisch seriell in der Bilddatenleitung, vorzugsweise nahe am Display insbesondere unmittelbar am Bilddateneingang des Displays, angeschlossen sein.

In für herkömmliche Bedienkonzepte besonders geeigneter Ausführungsform wird zum Bedienen der Benutzeroberfläche ein Zeiger bzw. Cursor, insbesondere ein durch eine Computermaus gesteuerter Mauszeiger, am Display angezeigt. Dabei kann vorgesehen sein, dass der Zeiger ausschließlich von der Überwachungseinheit generiert wird, insbesondere durch Bilddatenmodifikation in der Überwachungseinheit, z.B. anhand der ersten Rechnerkomponente, auf Grundlage der Eingabeinformation welche der Überwachungseinheit zugeführt wird. Hierbei kann wiederum das Eingabegerät, vorzugsweise ein relatives Zeigegerät, insbesondere eine Computermaus, vorzugsweise unmittelbar an die Überwachungseinheit angeschlossen sein. Dementsprechend leitet das Modul diese Eingabeinformation an den darstellenden Rechner weiterleitet.

Verfahren und Vorrichtung können so implementiert sein, dass der Zeiger bzw. Cursor in der GUI für den Benutzer sichtbar, insbesondere dauerhaft sichtbar, angezeigt bzw. eingeblendet ist, um eine gewohnte, kontinuierliche Bedienung zu ermöglichen.

Als Eingabegerät wird bevorzugt ein relatives und/oder indirektes Zeigegerät verwendet, das vorzugsweise zur kontinuierlichen Zeigerführung geeignet ist. Dabei können COTS-Zeigegeräte verwendet werden, z.B. mit USB-Anschluss. Es liegt jedoch auch im Rahmen der Erfindung nicht ein COTS-Zeigegerät, sondern eine Spezialanfertigung als Zeigegerät vorzusehen, dass mit einem herkömmlichem relativen Zeigegerät kompatibel ist (z.B. einer Computer-Maus) und zusätzlich eine unabhängige SIL-fähige Bestätigungsvorrichtung, z.B. einen signaltechnisch sicheren Taster, als integrierten Bestandteil aufweist. Die Bestätigungsvorrichtung ist dabei vorzugsweise unabhängig von der Signalverbindung des Zeigegeräts über einen eigenen getrennten Signalpfad, der logisch und/oder physisch sicher ausgelegt ist, mit der Überwachungseinheit verbunden.

In einer weiteren Ausführungsform mit Zeigerbedienung kann vorgesehen sein, dass der Zeiger, zumindest außerhalb aller vorbestimmter Bildbereiche für sicherheitskritische Bedienelemente, durch den darstellenden Rechner generiert wird. Dabei kann wiederum vorgesehen sein, dass wenn eine Selektion eines sicherheitskritischen Bedienelements durch die Überwachungseinheit erkannt wird, in dem jeweils zugeordneten Bildbereich, kein rechnergenerierter Zeiger angezeigt wird, vorzugsweise durch Bilddatenmodifikation in der Überwachungseinheit. Insbesondere in dieser Ausführungsform kann das Eingabegerät, insbesondere eine Computermaus, auf konventionelle Weise, z.B. über einen USB-Port, unmittelbar an den darstellenden Rechner angeschlossen sein. Dementsprechend leitet letzterer Eingabeinformation an die Überwachungseinheit weiter.

Insbesondere zur Vereinfachung der Bilddatenüberprüfung, bspw. durch Prüfcode-Berechnung, kann es vorteilhaft sein, wenn der Zeiger, insbesondere Mauszeiger, jeweils zyklisch ein- und ausgeblendet wird, vorzugsweise mit einer Frequenz die vom Benutzer nicht als störend wahrgenommen wird. So kann bspw. zu jeweils N aufeinanderfolgenden Bildzyklen der Bilddaten, der Mauszeiger lediglich zu einer Anzahl m < N Bildzyklen vom Rechner oder der Überwachungseinheit dargestellt werden. Dies bietet die Möglichkeit, Prüfcodes für Bilddaten mit ausgeblendetem Zeiger, insbesondere zu dem/den Bedienelementen, zu berechnen. Dies vereinfacht die Überprüfung auf korrekte Darstellung erheblich, da Zeiger typisch hoch positionsvariabel bzw. in einem sehr feinen Raster innerhalb der GUI beweglich sein sollen. Alternativ kann die Zeigerdarstellung durch geeignete Software innerhalb des/der Bedienelemente auch auf eine einzige vorgegebene Position fixiert bzw. geklippt werden, solange die ermittelten Koordinaten bzw. die Eingabeinformation nicht aus dem zugehörigen Bereich führen.

Die Eingabeinformation kann, je nach Eingabegerät insbesondere absolute Koordinateninformation, wie für ein Touch typisch, oder relative Koordinateninformation, wie für eine Computermaus typisch, darstellen. Relative Koordinateninformation kann dabei rechentechnisch einfach in absolute Koordinateninformation umgewandelt werden.

Vorrichtungsseitig wird ferner gattungsgemäß eine Überwachungseinheit zum Überwachen einer grafischen Benutzeroberfläche (GUI), vorgeschlagen, welche zumindest:
- eine digitale Bilddatenschnittstelle zur Verbindung mit einer Bilddatenleitung für die Übertragung rechnergenerierter Bilddaten von einem Rechner an ein Display, insbesondere eine LVDS-Schnittstelle, eine HDMI-Schnittstelle oder dgl.;
- mindestens eine Rechnerkomponente welche eine Sicherheitsfunktion implementiert und zumindest Teile der Bilddaten über die Bilddatenschnittstelle ausliest; und
- eine Geräteschnittstelle für Eingabeinformation, insbesondere ausgehend von einem Eingabegerät zur benutzergesteuerten Selektion eines grafischen Bedienelements; umfasst.

Weiterhin ist gemäß dem zweiten Aspekt erfindungsgemäß vorgesehen, dass: die Überwachungseinheit einen physischen Bestätigungs-Eingang aufweist, an welcher die sichere Bestätigungsvorrichtung zur Eingabebestätigung bzw. Nutzervalidierung anschließbar ist, und die mindestens eine Rechnerkomponente eingerichtet ist um sicherzustellen und/oder zu überprüfen, dass eine erkannte Selektion des Bedienelements korrekt in dem Display zugeführten Bilddaten dargestellt ist, insbesondere gemäß einer der vorstehend genannten Verfahrensformen.

Weiterhin ist die Überwachungseinheit gemäß dem zweiten Aspekt erfindungsgemäß eingerichtet, um bei Empfang einer Bestätigungseingabe über die Bestätigungs-Schnittstelle, insbesondere während einer dargestellten Selektion des Bedienelements bzw. in zeitlich vorbestimmtem Zusammenhang mit einer dargestellten Selektion des Bedienelements, einen zugeordneten sicherheitsrelevanten Bedienbefehl auszugeben, insbesondere über eine Sicherheits-Schnittstelle.

Die vorgeschlagene Überwachungseinheit hat vorzugsweise mindestens eine Rechnerkomponente die zur Bilddatenmodifikation und/oder zur Berechnung von Prüfcodes aus den Bilddaten eingerichtet ist. Sie kann mindestens einen Speicher für die Vorgabe vorbestimmter Bildbereiche und/oder Referenzcodes aufweisen, insbesondere zu Prüfzwecken.

Bevorzugt hat die Überwachungseinheit eine Controllerkomponente für ein Eingabegerät, welche mit der Geräteschnittstelle verbunden ist zum unmittelbaren Anschluss eines Eingabegeräts. So kann z.B. insbesondere eine Computermaus, unmittelbar an die Überwachungseinheit angeschlossen werden. Insbesondere in diesem Fall hat die Überwachungseinheit vorzugsweise eine Datenschnittstelle, insbesondere eine bidirektionale Datenschnittstelle, zum Übertragen von Eingabeinformation an den darstellenden externen bzw. separaten Rechner.

Die Erfindung betrifft auch ein System für eine sicherheitsrelevante Eingabe an einer GUI, umfassend einen Rechner und ein mit diesem über eine Bilddatenleitung verbundenes Display für Pixelgrafik. Erfindungsgemäß ist dabei, insbesondere nach dem ersten Aspekt, eine vom Rechner physisch getrennte Überwachungseinheit wie vorstehend beschrieben vorgesehen.

Nach dem zweiten Aspekt kann das System weiterhin ein Eingabegerät, insbesondere eine Computermaus, zum Bedienen einer Benutzeroberfläche umfassen, welches vorzugsweise unmittelbar an die Geräteschnittstelle der Überwachungseinheit angeschlossen ist. Weiterhin ist zumindest nach dem zweiten Aspekt eine separate sichere Bestätigungsvorrichtung, insbesondere ein Sicherheitstaster, z.B. mit Öffner- und Schließ-Kontakt, an den physischen Bestätigungs-Eingang der Überwachungseinheit angeschlossen.

Die vorstehenden Verfahrensmerkmale und Vorrichtungsmerkmale sind untereinander kombinierbar und jeweils auch unabhängig bzw. für sich genommen als erfindungserheblich anzusehen.

Die vorgeschlagene Lösung kann beispielsweise zum Parametrieren in sicherheitsrelevanten Prozessen bzw. Anlagen, z.B. der Prozesstechnik oder der Automatisierungs-Technik, vorteilhaft eingesetzt werden, um eine sichere und zugleich benutzerfreundliche Bedienung durch eine GUI zu ermöglichen.

Das Anwendungsgebiet der Erfindung ist nicht auf Displays oder Desktop-Rechnersysteme beschränkt, sondern umfasst auch sog. Convertibles oder tragbare Kleingeräte, z.B. zur Fernsteuerung von Maschinen oder Anlagen. Solche Kleingeräte, wie Tablett-PCs und dgl., werden beispielsweise inzwischen zur Steuerung von Container-Kränen in Häfen oder zur Programmierung von Industrierobotern verwendet. Ferner kann die Erfindung auch im Bereich kritischer Zugriffs- bzw. Autorisierungssicherheit (Engl. security), insbesondere von autorisierungsbedürftigen Systemen Anwendung finden.

Die vorgeschlagene Weiterentwicklung, insbesondre nach dem ersten Aspekt eignet sich weiterhin insbesondere zur Anwendung im Führerstand eines schienengebundenen Triebfahrzeugs mit einem DMI, z.B. einem ETCS-konformen DMI, in welche die Überwachungseinheit integriert werden kann um sicherheitskritische Grafik zu mehreren Parametern, z.B. die aktelle Geschwindigkeit auf einem digitalen Tachometer sowie relevante Bremsinformation oder dgl. darzustellen.

Die Überwachungseinheit kann insbesondere aber nicht ausschließlich zur selektiven Fehleraufdeckung in einem kritischen Bildbereich und/oder zur Kenntlichmachung von sicherheitskritischen, überwachten Bereichen in einer grafischen Benutzeroberfläche genutzt werden.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Hierbei zeigen
**FIG.1****:** ein Prinzipschema eines Systems für sicherheitsrelevante Benutzereingaben an einer von einem unsicheren Rechner erzeugten, grafischen Benutzeroberfläche (GUI);
**FIG.2A-2C****:** drei Ausführungsbeispiele zum Überwachen einer GUI, mit Eingabegerät am darstellenden Rechner angeschlossen und Bestätigungsvorrichtung an einer erfindungsgemäßen Überwachungseinheit angeschlossen (FIG.2A); mit Eingabegerät und Bestätigungsvorrichtung an einer erfindungsgemäßen Überwachungseinheit angeschlossen (FIG.2B); und (FIG.2C) eine Variante zur Bestätigungsvorrichtung aus FIG.2B;
**FIG.3A-3C****:** zur Veranschaulichung eines erfindungsgemäßen Verfahrens unterschiedliche Zustände einer rein beispielhaften GUI an einem Display, mit Bedienelementen und einem Mauszeiger zur Selektion eines Bedienelements in unterschiedlichen Zuständen: mit einem selektierten nicht sicherheitsrelevanten Bedienungselement (FIG.3A), ohne Selektion (FIG.3B), und mit einem selektierten sicherheitsrelevanten Bedienungselement (FIG.3C);
**FIG.4A-4B****:** zwei Ausführungsbeispiele einer Überwachungseinheit mit schematischen Signalflussdiagrammen zur Veranschaulichung, wie die Überwachungseinheit sicherstellt, dass eine erkannte Selektion eines Bedienelements korrekt in Bilddaten dargestellt ist;
**FIG.5A-5B****:** Architekturen einer Überwachungseinheit zur sicheren Eingabe (FIG.5A) und/oder Anzeige (FIG.5B) in sicherheitskritischen Anwendungen gemäß der Erfindung; und
**FIG.6****:** ein Prinzipschema eines Displaygeräts mit integrierter Überwachungseinheit gemäß einem der Erfindungsaspekte.

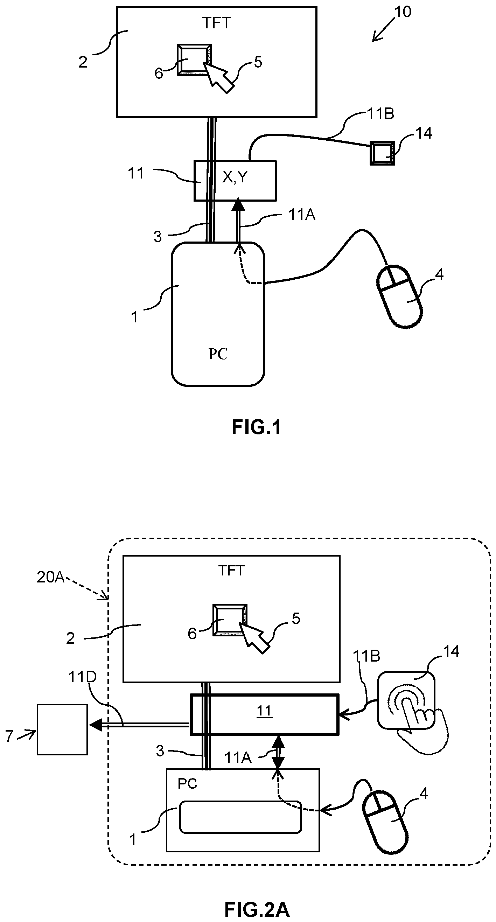

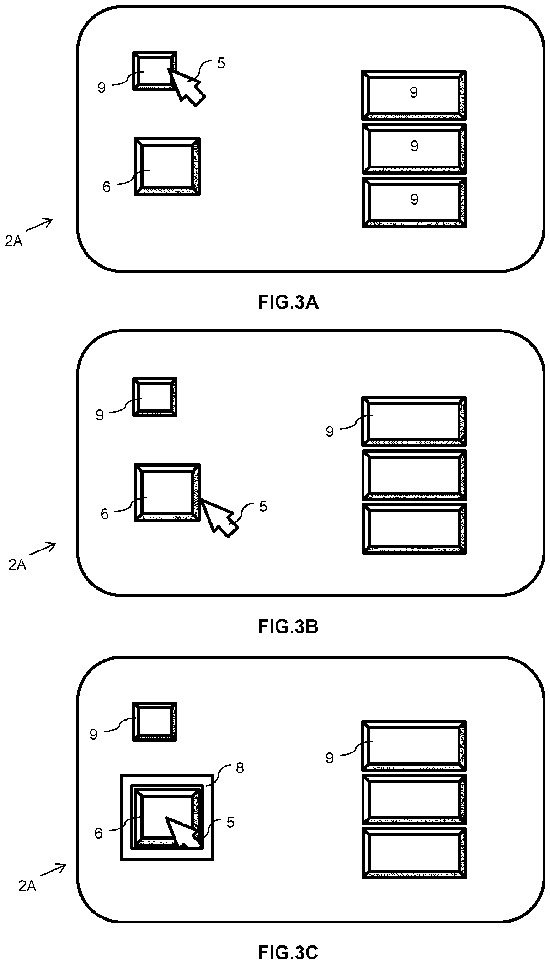

FIG.1 zeigt schematisch eine Anordnung bzw. ein System 10 für sicherheitsrelevante Eingaben an einer grafischen Benutzeroberfläche (GUI), mit einem Rechner 1, welcher pixelformatierte, digitale Bilddaten generiert. Die Bilddaten werden einem COTS-Display 2, z.B. einem TFT-Computerbildschirm, über eine geeignete Bilddatenleitung 3 zur Anzeige zugeführt. Als Grafik darstellender Rechner 1, nachfolgend kurz PC 1, kommt dabei jeder COTS-Computer, z.B. ein Desktop-PC in Betracht. Der PC 1 ist im Sinne der Sicherheitsanforderungen als unsicher zu betrachten bzw. nicht signaltechnisch sicher bzw. unsicher im Sinne der Sicherheitstechnik. Der PC 1 ist unter anderem zum Darstellen einer beliebigen, anwendungsabhängig gewünschten GUI am Display 2 programmierbar bzw. programmiert (vgl. FIG3A-3C), ggf. mit kontextabhängig unterschiedlichen Modi bzw. Bildschirmmasken. Teil des Systems 10 in FIG.1 ist ein Eingabegerät zum Bedienen der GUI nämlich in FIG.1 ein relatives, kontinuierliches und indirektes Zeigegerät, hier eine handelsübliche Computermaus 4. Die COTS-Computermaus, kurz Maus 4 ist in üblicher Technik, in FIG.1 z.B. am PC 1 angeschlossen. Die Maus 4 ist sicherheitstechnisch auch als nicht sicher zu sehen.

Anhand der Maus 4, oder einem anderen relativen, indirekten und kontinuierlichen, kann der Benutzer in gewohnter Weise grafische Bedienelemente bedienen, durch Bewegung eines Positionszeigers bzw. Mauszeigers 5 in der vom PC 1 generierten GUI-Darstellung.

Zum Erreichen der gewünschten Sicherheitsstufe, z.B. SIL-3, trotz Verwendung unsicherer Komponenten, wie des unsicher darstellenden PCs 1 und eines COTS-Eingabegeräts, hier der Maus 4, ist - wie in FIG.1 schematisch dargestellt - eine zusätzliche modulare Überwachungseinheit 11 vorgesehen. Die Überwachungseinheit 11 ist in Form von separater Hardware bzw. als eigenständiges Modul vorgesehen und sicherheitszertifiziert. Die modulare Überwachungseinheit 11, nachfolgend kurz SMU (Engl. safety monitoring unit) ist mit der Bilddatenleitung 3 verbunden und kann z.B. am Bilddateneingang des Displays 2 angeschlossen sein. Die SMU 11 ist eingerichtet um zur Realisierung einer Sicherheitsfunktion zumindest Teile der Bilddaten aus der Bilddatenleitung 3 auszulesen und vorbestimmte Bildbereiche zu überwachen, insbesondere zwecks Fehleraufdeckung, und/oder ggf. auch Bilddaten zwecks Anzeige am Display 2 zu modifizieren. Die Bilddatenleitung 3 kann in jedem geeigneten Signalformat z.B. LVDS oder dgl. übertragen, wobei die Bilddaten vorzugsweise digital und pixelformatiert sind.

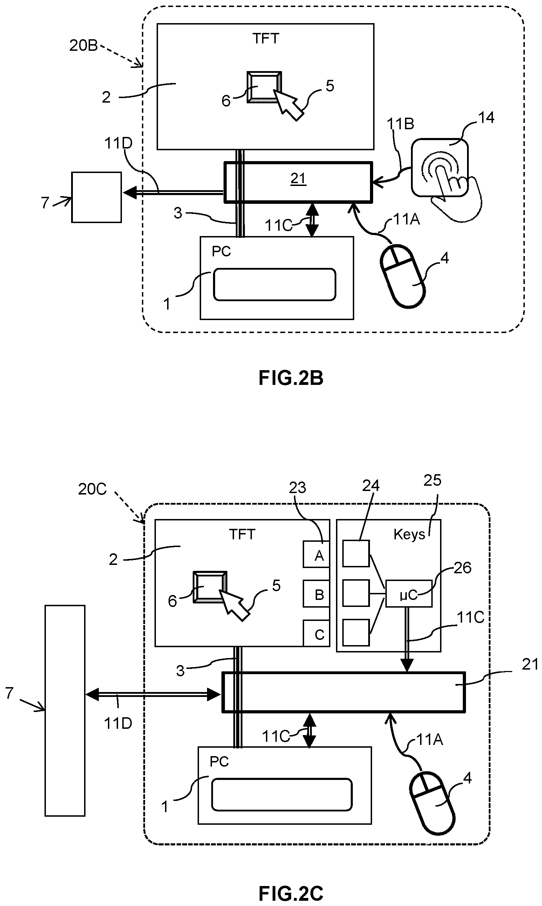

Der SMU 11 werden weiterhin über einen ersten Signalpfad bzw. Kanal 11A, der nicht sicher ausgeführt sein muss, Eingabeinformationen zugeführt. Diese umfassen insbesondere ausgehend von Bedienung der Maus 4 bestimmte Koordinaten, entweder Relativkoordinaten (FIG.2A) oder daraus generierte grafikbezogene Zeigerkoordinaten (FIG.2B) eines Mauszeigers 5 (=Cursor). Zeigerkoordinaten können in FIG.1 z.B. vom PC 1 aus Relativkoordinaten der Maus 4 ermittelt und über den ersten Kanal 11A vom PC 1 an die SMU 11 übertragen werden. Je nach Eingabegerät, z.B. bei einem Digitizer, können von diesem auch Absolutkoordinaten generiert und über den Kanal 11A an die SMU 11 übertragen werden.

Auf Grundlage solcher Eingabeinformation, insbesondere der Zeigerkoordinaten, kann die SMU 11 ein Anwählen bzw. eine benutzergesteuerte Selektion eines sicherheitskritischen Bedienelements 6 (hier nur schematisch angedeutet) erkennen. Als sicherheitskritisches Bedienelement 6 wird kommt hierbei jedes Bedienelement der GUI in Betracht, dessen Betätigung eine anwendungsabhängige sicherheitsrelevante Funktion im Sinne der Gefahren- bzw. Betriebssicherheit (Engl. safety), (z.B. das Umstellen von Weichen in einem Stellwerk der Eisenbahntechnik), oder auch der Zugriffs- bzw. Autorisierungssicherheit (Engl. security), zugeordnet ist bzw. auslösen soll (z.B. eine PIN-Eingabe). Ein solches sicherheitskritisches Bedienelement wird nachfolgend kurz mit SEE (Engl. safety/security relevant entry element) bezeichnet.

FIG.1 zeigt weiterhin eine separate Bestätigungsvorrichtung 14, hiernach kurz CD (Engl. confirmation device), die über einen zweiten Signalpfad bzw. Kanal 11B an die SMU 11 angeschlossen ist. Die CD 14 ist bevorzugt von der Maus 4 hardwaremäßig getrennt ausgeführt. Die CD 14 ist vorzugsweise SIL-fähig und jedenfalls über einen eigenen, sicheren Kanal 11B an die SMU 11 angeschlossen. Die CD 14 dient im System 10 zur benutzergesteuerten Bestätigung einer gewünschten Bedienung bzw. Betätigung eines sicherheitskritischen Bedienelements, schematisch als SEE 6 gezeigt, das anhand des durch die Maus 4 gesteuerten Cursors 5 zuvor angewählt wurde. Betätigung von Tasten der Maus 4 wird insoweit bei SEEs 6 durch entsprechende Programmierung ignoriert bzw. kann nicht zum Auslösen einer dem betrachteten SEE 6 zugeordneten kritischen Funktion dienen. Ein entsprechendes Auslösen muss vielmehr vom Benutzer anhand der CD 14, z.B. eines sicheren Tasters bzw. Push-Buttons, vorgenommen werden. Der Benutzer validiert bzw. bestätigt für ein bzw. jedes vorgesehene SEE 6 somit seine Auswahl bzw. Selektion jeweils separat und einzeln durch Eingabe an bzw. Betätigung der zusätzlichen CD 14.

Eine Selektion von Bedienelementen, einschließlich eines von ggf. mehreren SEE 6 erfolgt entsprechend einer Nutzersteuerung des Cursors 5. Die SMU 11 ist weiterhin rechentechnisch so konfiguriert, z.B. programmiert, dass diese entweder selbst sicherstellt, zumindest aber überprüft, dass eine erkannte Anwahl bzw. Selektion eines von ggf. mehreren SEE 6 (vgl. zu FIG.3A-3C unten) korrekt in denjenigen Bilddaten dargestellt ist, die über die Bilddatenleitung 3 dem Display 2 zugeführt werden. So wird gewährleistet, dass eine Selektion, die innerhalb des SMU 11 programmtechnisch als aktuell vorgenommen gilt, z.B. auf Grundlage von Zeigerkoordinaten des Cursors 5, sich in sicherer Weise mit dem deckt, was dem Betrachter bzw. Benutzer durch geeignetes Kenntlichmachen am Display 3 angezeigt wird. Letzteres kann softwaretechnisch in der SMU 11 umgesetzt werden.

Wie dabei das Kenntlichmachen für den Benutzer erfolgt, insbesondere ob durch den PC 1 oder die SMU 11 erzeugt, ist zweitrangig, solange ein Benutzer die Selektion, die von der SMU 11 als aktuell geltend betrachtet bzw. vorgehalten wird, visuell erkennt. Das Kenntlichmachen kann sich insbesondere bereits darin erschöpfen, dass der Cursor 5 in herkömmlicher Weise auf ein SEE 6 zeigt, da dies für den Benutzer sichtbar ist und der gewohnten Bedienung entspricht. Das Anzeigekonzept und das Bedienkonzept klassischer Desktoparbeitsplätze mit PC 1, Display 2 und per mausgeführtem Cursor 5 in einer GUI bleibt so erhalten.

Die gewünschte Sicherheitsstufe, z.B. SIL-3, erreicht das System 10 u.a. dadurch, dass nicht der (unsichere) darstellende PC 1, sondern ausschließlich die sichere bzw. SIL-geeignete SMU 11 bei Empfang einer benutzergesteuerten Bestätigung von der eigens dazu vorgesehenen CD 14 einen sicherheitsrelevanten Bedienbefehl auslöst bzw. eine sicherheitsrelevante Funktion passend zum selektierten SEE 6 freigibt. Eine eindeutige Zuordnung der Selektion eines beliebigen Bedienelements der GUI ist bei zeigerbasierten GUI mit Cursor 5 inhärent (da stets nur ein Cursor 5 vorliegt). Die Bestätigung wird, sofern gegeben, genau einer einzigen aktuell von der SMU 11 als sicher angezeigt betrachteten Selektion, d.h. genau einem SEE 6 zugeordnet, oder andernfalls verworfen. Dazu wird insbesondere eine Aktivierung der CD 14 während einer dargestellten Selektion des betroffenen SEE 6 von der SMU 11 überwacht bzw. abgefragt und zum Auslösen eines diesem SEE 6 zugeordneten Bedienbefehls durch die SMU 11 genutzt. Ein Überwachen bzw. Abfragen der CD 14 kann ausbleiben, wenn die SMU 11 keine gültige Selektion eines von ggf. mehreren SEE 6 erkennt bzw. nur bei erkannter Selektion erfolgen (Fail-Safe-Verhalten). Das Display 2 wird vorliegend als sicher angesehen, da typische Fehlerfälle für den Benutzer erkennbar sind (Fehleraufdeckung). Zusätzliche Hardware-Maßnahmen zur Überprüfung einer korrekten Anzeige am Display 2 können jedoch ebenfalls realisiert werden.

FIG.2A-2C zeigen drei Ausführungsformen erfindungsgemäßer Systeme 20A, 20B, 20C zur sicheren Eingabe anhand eines relativen Zeigegeräts, mit einer SMU 11 bzw. 21 im Bilddatenstrom 3.

FIG.2A zeigt ein System 20A das weitgehend dem Prinzip aus FIG.1 entspricht, nämlich mit einer Maus 4 die unmittelbar am PC 1 angeschlossen ist, z.B. an einem USB-Port, sowie einem sicheren Taster als CD 14. Die CD 14 ist über einen sicheren Kanal 11B unmittelbar an die separate SMU 11 angeschlossen. Die relativen Koordinaten der Maus 4 werden hier im PC 1 in bildbezogene bzw. absolute Zeigerkoordinaten zur Steuerung des Cursors 5 gewandelt und laufend über einen Kanal 11A, der nicht sicher ausgelegt sein muss, an die SMU 11 übermittelt. Alternativ können absolute Zeigerkoordinaten auch in der SMU 11 bestimmt werden und über den Kanal 11A an den PC 1 rückgesendet werden. Der Kanal 11A ist beim System 20A bidirektional ausgelegt, sodass die SMU 11 Steuerbefehle an den PC 1 rücksenden kann, insbesondere betreffend die Darstellung am Display 2, z.B. hinsichtlich einer Ausblendung des Cursors 5, wenn dieser auf ein SEE 6 zeigt, zu einer zusätzlichen visuellen Hervorhebung des SEE 6 auf das der Cursor 5 aktuell zeigt (Selektion), usw. Wenn die Maus am PC 1 angeschlossen ist, ist dieser vorzugsweise so programmiert, dass SEEs 6 nicht unmittelbar über den PC 1 bzw. über Tasten der Maus 4 bedient werden können.

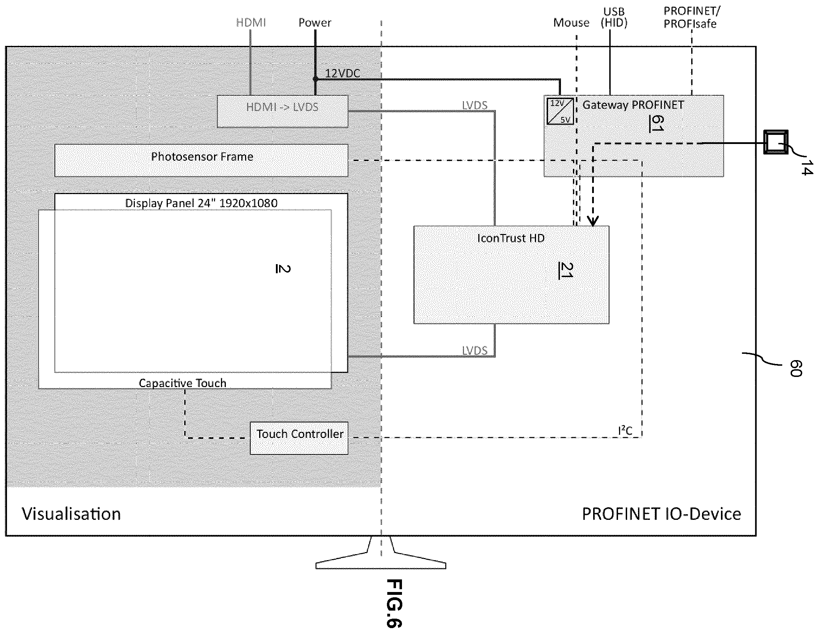

Weiterhin ist die SMU 11 über einen sicheren Signalpfad bzw. Kanal 11D mit einem externen, übergeordneten Sicherheitsrechner 7, z.B. einer Anlagensteuerung oder dgl., verbunden. Die SMU 11 gibt bei Empfang einer benutzergesteuerten Bestätigung am Taster 14, während einer dargestellten Selektion des SEE 6 (auf das der Cursor 5 zeigt), z.B. einer GUI-Validierungstaste für eine Anlagenparametrierung, einen dem SEE 6 zugeordneten sicherheitsrelevanten Bedienbefehl aus, z.B. über den Kanal 11D an den Sicherheitsrechner 7. Der sichere Signalpfad bzw. Kanal 11D zum Sicherheitsrechner 7 kann durch einen geeigneten Bus oder ein geeignetes Netzwerk, z.B. PROFINET (vgl. FIG.6) oder ProfiSafe, vorzugsweise mit einer Sicherungssicht (OSI-Modell) die für signaltechnisch sichere Übertragung geeignet ist, realisiert sein.

Die CD 14 kann funktional sicher ausgelegt sein, z.B. über geeignete Controller-Technik in der SMU 11, und z.B. als einkanaliger Taster 14 ausgeführt sein. Durch einen geeigneten Controller kann eine zuverlässige Funktion der CD 14 rein softwaremäßig sichergestellt werden. Für höhere Sicherheitsanforderungen kann die CD 14 auch zweikanalig, z.B. mit Öffner und Schließer, und/oder physisch sicher ausgeführt sein. Es muss vor allem sichergestellt sein, dass die CD 14 nicht fehlerhaft eine tatsächlich nicht vorgenommene Betätigung an die SMU 11 übermittelt. Ein Ausbleiben einer vorgenommenen Betätigung an der CD 14 wird vom Benutzer als Fehler erkannt.

Mit dem System 20A nach FIG.2A kann eine kontinuierliche Einblendung des Zeigers 5, der durch die Maus 4 gesteuert wird, bspw. anhand des darstellenden PCs 1 erfolgen und die Darstellung am Display 2 von der SMU 11 auf Korrektheit überwacht werden, z.B. gemäß dem Konzept aus WO 2011/003872 A1, d.h. unter Verwendung von Prüfcodes, welche die SMU 11 für pixelformatierte Überwachungsbereiche berechnet, und Nutzung der Prüfcodes in einem Vergleich mit einem Referenzcode bzw. zum Rückschluss auf einen Wert, der dann mit einem Referenzwert verglichen wird. Die Lehre bzgl. der Nutzung von Prüfcodes aus WO 2011/003872 A1 bzw. dem Patent EP 2 353 089 B1 wird als bevorzugte Lösung angesehen.

FIG.2B zeigt ein bevorzugtes System 20B, welches sich von FIG.2A vor allem dadurch unterscheidet, dass die Maus 4 hier über den Kanal 11A unmittelbar an die SMU 21 angeschlossen ist. Hierzu kann die SMU 21 z.B. einen hierfür geeigneten Eingabegeräte-Controller, bspw. in einem vorhandenen Mikrocontroller bzw. Prozessor umfassen, oder eine geeignete integrierte separate Hardware-Komponente aufweisen. Der Eingabegeräte-Controller kann auch gesondert extern realisiert sein und über eine Schnittstelle, z.B. I²C, mit der SMU 21 kommunizieren (FIG.6). Bei der bevorzugten Architektur aus FIG.2B erfolgt innerhalb der SMU 21 eine Umwandlung der Relativkoordinaten, welche die Maus 4 als Eingabe erzeugt bzw. überträgt, in bildbezogene Zeigerkoordinaten. Resultierende bildbezogene Zeiger-Koordinaten oder auch die relativen Eingabekoordinaten der Maus und ggf. Maustasten-Interrupts werden dann zwecks Steuerung der GUI von der SMU 21 über den Datenkanal 11C laufend an den PC 1 übermittelt, sodass der PC 1 für nicht sicherheitsrelevante Eingaben die Position des Zeigers zur Darstellung der GUI und evtl. Betätigung der von Tasten der Maus 4 verarbeiten kann. In der Konfiguration nach FIG.2B verfügt die SMU 21 stets über aktuelle und ggf. auch sichere Eingabedaten vom Eingabegerät, hier der Maus 4.

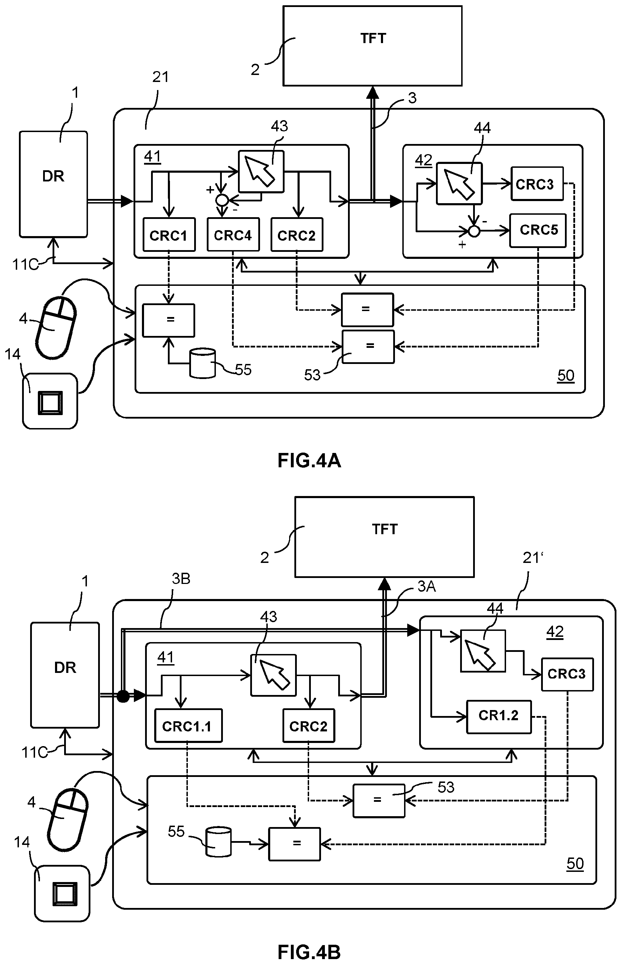

Insbesondere mit einem System 20B nach FIG.2B erfolgt eine kontinuierliche Einblendung des Zeigers 5, durch die Maus 4 gesteuert, bevorzugt innerhalb der bzw. durch die SMU 21 selbst. Dazu bewirkt die SMU 21 eine Modifikation der Bilddaten, welche an das Display 2 weitergeleitet werden, z.B. durch bereichsweises Überblenden der vom PC 1 generierten Grafik (siehe unten zu FIG.4A-4B unten). Dabei hat die SMU 21 inhärent stets Kenntnis über die Zeigerkoordinaten und auch über jede Selektion eines SEE 6, um bei anschließender Bestätigung durch den Benutzer mittels der CD 14 eine zugeordnete kritische Funktion auszulösen, z.B. einen zugeordneten sicherheitsrelevanten Bedienbefehl über den Kanal 11D an den Sicherheitsrechner 7 weiterzuleiten.

FIG.2C zeigt eine weitere Variante eines Systems 20C, welches sich vor allem durch die Art der Bestätigungsvorrichtung (CD) unterscheidet. Im System 20C ist eine Softkey-Tastatur 25, die an einem das Display 2 umfassenden HMI vorgesehen ist, mit der SMU 21 als sichere Bestätigungsvorrichtung über eine sichere Signalstrecke 11B verbunden. Die Softkey-Tastatur 25 entspricht dabei der Bauweise gemäß DE 20 2015 104 887 U1, auf die insoweit zur Verkürzung verwiesen wird. Durch den Softkey-Controller 26 wird funktionale Sicherheit der physischen Tasten 24 sichergestellt. Die SMU 21 kann alternativ direkt und sicher die Tasten 24 auslesen. Die Tasten 24 sind typisch am Rand des Displays 2 angeordnet. Es können dabei grafische Icons 23, Symbole etc. durch den PC 1 angezeigt werden, die den einzelnen Tasten 24 der Softkey-Tastatur 25 zugeordnet sind. Zur Bestätigungseingabe für ein SEE 6 kann kontextabhängig eine jeweils andere oder stets dieselbe Taste 24 genutzt werden, wobei z.B. anhand eines geeigneten Icons 23 dem Benutzer in der GUI die Sicherheitsrelevanz bzw. der erforderliche Bestätigungsvorgang visuell angezeigt werden kann für eine intuitivere Benutzung. Die Korrektheit der Darstellung solcher ergänzender Icons 23 betreffend den Bestätigungsvorgang kann wiederum ebenfalls von der SMU 21 überwacht werden, z.B. durch Codieren der zugeordneten Bilddaten und Vergleich mit einem erwarteten Referenzcode, gemäß dem Konzept aus WO 2011/003872 A1.

Auch beim System 20C wird eine Trennung zwischen der zeigerbasierten Auswahl bzw. Selektion von kritischen SEE 6 und deren eigentlicher Betätigung/Bedienung durch eine gesonderte Bestätigung, hier an einer der Softkey-Tasten 24 realisiert. Die entsprechende Softkey-Taste 24 ist zur Bestätigungseingabe dem selektierten SEE 6 in der SMU 21 vorbestimmt zugeordnet. Dementsprechend kann die SMU 21 bei tatsächlicher Bestätigung durch den Benutzer, d.h. Drücken der vorbestimmten Taste 24, den zugeordneten Bedienbefehl über den Kanal 11D an den Sicherheitsrechner 7 ausgeben. Im Übrigen kann das System 20C, wenn der Cursor 5 ausschließlich von der SMU 21 eingeblendet wird, zusätzlich ggf. auch weitere Funktionalitäten gemäß DE 20 2015 104 887 U1 oder auch gemäß EP 2 551 787 B1 realisieren. Bei Einblendung des positionsvariablen Cursors durch den PC 1 wäre eine derartige Lösung, wegen dem Erfordernis eindeutiger Prüfcodes aus den Bilddaten, jedoch nicht ohne erheblichen Software-Aufwand möglich. Hier steht jedoch eine sichere Bedienung der GUI per Cursor 5 anhand eines relativen, kontinuierlichen und indirekten Eingabegerätes wie der Maus 4 im Vordergrund, d.h. sonstige Funktionen der Softkey-Tasten 24 neben der Bestätigungseingabe optional sind.

Anhand einer schematischen GUI 2A in FIG.3A-3C wird nachfolgend die Funktionsweise bzw. das Verfahren kurz erläutert.

Der Benutzer bewegt den Cursor 5 über das vom Display 2 angezeigte Bild bzw. innerhalb der GUI 2A. Dabei sind ggf. auch eine Anzahl nicht sicherheitsrelevanter Bedienelemente 9 vorgesehen, deren Bedienung in ganz herkömmlicher Weise durch den PC 1 umgesetzt wird, ggf. ohne Mitwirkung der SMU 11; 21.

Wenn die Position des Cursors 5, erkennbar anhand der Zeigerkoordinaten, jedoch in einen vordefinierten Bildbereich (Überwachungsbereich) entsprechend einem SEE 6 geführt wird, erkennt die SMU 11; 21 eine sicherheitsrelevante Selektion. Die Zeigerkoordinaten (Absolut-Koordinaten) sind dazu in der SMU 11; 21 stets aktualisiert vorgehaltenen, aufgrund indirekter (FIG.2A) oder direkter Übermittlung (FIG.2B/2C) vom Eingabegerät 4. Eine Selektion wird erkannt anhand der grafikbezogenen Bildkoordinaten, die in der SMU 11; 21 als Anzeigebereich des SEE 6 bzw. entsprechender Überwachungsbereich vorbestimmt sind. Ein Eintreten des Cursors 5 in diesen Grafikbereich der GUI 2A, wird so z.B. in einer Eingangsstufe der SMU 11; 21 erkannt. Optional erfolgt, entweder durch den PC 1 gesteuert durch die SMU 11; 21 oder vorzugsweise durch die SMU 11; 21 selbst, eine zusätzliche visuelle Hervorhebung dieses Bereichs, bspw. durch eine deutlich erkennbare Umrandung 8 oder dgl., wie schematisch in FIG.3C angedeutet.

Die SMU 11; 21 hat aufgrund der aktuellen Zeigerkoordinaten des Zeigers 5 Kenntnis über eine vorliegende Selektion des bzw. eines SEE 6. Im Fall einer solchen Selektion wird von der SMU 11; 21 eine korrekte Zeigerdarstellung und optional geeignete visuelle Hervorhebung überprüft oder sichergestellt. Darauf beruhend kann die SMU 11; 21 eine Bestätigungseingabe, insbesondere eine während der aktiven Hervorhebung des angewählten SEE 6 erfolgende Bestätigungseingabe, am sicheren Taster 14 bzw. 24 als Validierung durch den Benutzer erkennen und der entsprechenden sicherheitskritischen Funktion des SEE 6 zuordnen. Bei entsprechender Bestätigungseingabe an der CD 14 bzw. 24 kann die SMU 11; 21 die sicherheitskritische Funktion freigeben z.B. einen entsprechenden Befehl an den Sicherheitsrechner 7 ausgeben. Dieser Befehl kann eine beliebige vorbestimmte Form haben und z.B. auch codierten Bilddaten zum SEE 6 entsprechen. Betätigung von konventionellen Maustasten der Maus 4 werden dabei ignoriert, weil als unsicher betrachtet, und können die Freigabe bzw. Befehlsausgabe durch die SMU 11; 21 nicht bewirken. Letzteres lässt sich leichter implementieren, wenn die Maus 4 unmittelbar an die SMU 11; 21 angeschlossen ist (FIG.2B).

Ein Überprüfen der Hervorhebung, insbesondere wenn durch den unsicheren PC 1 bewirkt, kann auch hier durch Codierung der Bilddaten eines zugeordneten Überwachungsbereichs in der SMU 11; 21 und Vergleich mit einem Soll-Code bzw. Referenzcode erzielt werden, z.B. gemäß WO 2011/003872 A1.

Die visuelle Hervorhebung der Auswahl eines SEE 6 kann sich allein in der Darstellung des Cursors 5 erschöpfen. Zur rechentechnischen Vereinfachung kann der Cursor 5 optional, wenn per Maus 4 in den Bildbereich eines SEE 6 geführt, über eine Art Clipping bzw. Snapping an einer vordefinierten Stelle gesetzt und gehalten werden, insbesondere wenn der Cursor 5 grafisch vom PC 1 erzeugt wird. Der Cursor 5 kann dabei z.B. mit Zeigerkoordinaten entsprechend der geometrischen Mitte des SEE 6 angezeigt bzw. eingeblendet, wobei die aktuellen Zeigerkoordinaten (Absolut-Koordinaten) überschrieben bzw. ignoriert werden können. So erhält der Cursor 5 im Falle der Anwahl bzw. Selektion stets eine vordefinierte grafische Darstellung innerhalb des selektierten SEE 6, sodass eine sicherheitsgerichtete Grafikprüfung, z.B. per Codevergleich, in der SMU 11; 21 ggf. spürbar vereinfacht wird. Zudem wird die Bediensicherheit erhöht bzw. der Benutzer kann dieses Verhalten als sicherheitsrelevant erkennen. Bei dieser Variante wird erst wenn der Cursor 5 anhand der Maus 4 in ausreichendem Maße aus dem überwachten Bildbereich des SEE 6 geführt wurde, in den üblichen Anzeigemodus zurückgeschaltet. Mit anderen Worten, wird das System vorteilhaft so konfiguriert, dass der Cursor 5, wenn er auf den überwachten Bildbereich eines SEE 6 geführt wird, ein für den Benutzer erkennbar anderes Verhalten aufweist, als in der restlichen GUI 2A, z.B. an einer vorgegebenen Bildposition gehalten oder ausgeblendet.

Bevorzugt wird jedoch die Hervorhebung der Selektion durch die SMU 11; 21 selbst bewirkt, insbesondere durch Modifikation der an das Display weitergeleiteten Bilddaten, auf welche die entsprechend mit der Bilddatenleitung 3 verschaltete SMU 11; 21 bestimmungsgemäß Zugriff hat. Die SMU 11; 21 selbst kann dazu insbesondere den Cursor 5 in die Bilddaten einblenden, wodurch die eine sicherheitsgerichtete Codierung der Bilddaten ebenfalls vereinfacht wird (vgl. zu FIG.4A-4B unten).

In beiden Fällen kann die SMU 11; 21 gewährleisten, dass die Zeigerkoordinaten des angezeigten Cursors 5 (für den Benutzer sichtbar) bei einer Selektion eines SEE 6 mit diesem übereinstimmen bzw. innerhalb des entsprechend überwachten Bildbereichs liegen. Die Validierung der Anwahl bzw. Selektion (=Vorauswahl) eines SEE 6 erfolgt von der Selektion getrennt und im Anschluss hieran durch den Benutzer, nämlich durch Betätigung der CD 14; 24. Dies wird von der SMU 11; 21 als notwendige Bedingung überwacht um die zugeordnete sicherheitsrelevante Aktion zu veranlassen, z.B. über einen separaten Kanal 11D hierzu.

FIG.4A-4B zeigen schematisch bevorzugte Implementierungen und Architekturen von SIL-geeigneten bzw. SIL-fähigen SMU 21, 21' z.B. für das Prinzip nach FIG.2B. Die Darstellung in FIG.4A-4B ist z.T. als Signalflussdiagram ausgeführt zur Beschreibung einer bevorzugten Funktionsweise. Die SMU 21, 21' sind als separate, modulare Hardware auf einer eigenen Platine bzw. Leiterkarte implementiert mit einer Schnittstelle zum Anschluss einer eingangsseitigen Bilddatenleitung vom PC 1, und mindestens Schnittstelle zum Anschluss eines relativen Eingabegeräts wie der Maus 4 und zum Anschluss der Bestätigungsvorrichtung (CD) 14, z.B. eines sicheren Tasters. Ausgangsseitig haben die SMU 21, 21' eine Schnittstelle zum Weiterleiten der Bilddaten über die Bilddatenleitung 3 an das Display 2 und mindestens einen Datenausgang bzw. eine weitere Schnittstelle für einen Datenkanal 11C, z.B. zur Kommunikation mit dem PC 1. Es kann ggf. eine gemeinsame Schnittstelle, z.B. für Maus 4 und den Datenkanal 11C genutzt werden. Ferner kann eine Verbindung zu einem Sicherheitsrechner 7 (FIG.2B) oder dgl. vorgesehen sein. Die Bilddaten werden bevorzugt über einen eigenen Kanal 3 übertragen.

Die SMU 21 in FIG.4A-FIG.4B hat eine zweistufige, kaskadierte Architektur mit zwei zumindest logisch getrennten Einheiten bzw. Rechnerkomponenten 41, 42, welche ggf. in Form einer gemeinsamen Hardware z.B. integrierten Schaltung ausgeführt sein können. Bevorzugt wird jedoch eine Ausführungsform mit zwei physisch getrennten Rechnerkomponenten 41, 42, insbesondere einem ersten FPGA 41 und einem separaten zweiten FPGA 42. Die Rechnerkomponenten bzw. FPGA 41, 42 dienen insbesondere der rechentechnischen Verarbeitung von Bilddaten und der Berechnung von Prüfcodes. Der erste FPGA 41 hat einen Eingang für Bilddaten vom PC1 und einen Ausgang für Bilddaten zum Display (LVDS-Sender). Der zweite FPGA 42 hat lediglich einen Eingang für Bilddaten, d.h. kann die Anzeige nicht verändern.

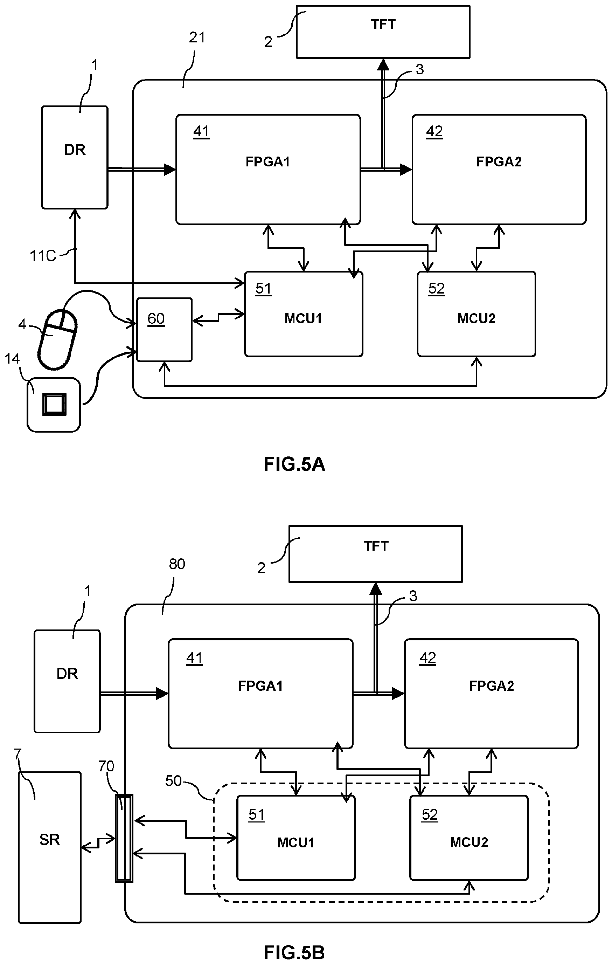

Die Funktionsweise der FPGAs 41, 42 wird über eine mit diesen signaltechnisch verbundenen Prozessoranordnung 50 geeigneter Bauart gesteuert und ergänzt, welche signaltechnisch mit beiden FPGAs 41, 42 verbunden ist. Die Prozessoranordnung 50 ist Bestandteil der SMU 21 und kann ein- oder mehrkanalig ausgeführt sein, z.B. zweikanalig, wie weiter unten zu FIG.5A-5B beschrieben. Die Prozessoranordnung 50 kann dabei in Zusammenwirkung mit den bildverarbeitenden Rechnerkomponenten 41, 42, insbesondere mit der Prüffunktion der Rechnerkomponenten 41, 42, ein geeignetes X-out-of-Y Schema nach IEC 61508 verwirklichen. FIG.5B zeigt z.B. ein 2oo2 Schema, das durch redundante Verarbeitung erst bei Ausfall beider Systeme keine GUI-Funktion mehr gewährleistet, d.h. erhöhte Sicherheit und hohe Verfügbarkeit bietet. Die Prozessoranordnung 50 kann je nach Anforderungen an Sicherheit und/oder Verfügbarkeit auch für ein anderes Voting-Schema konfiguriert sein, z.B. rein einkanalig (1oo1), zur redundanten Verarbeitung mit Kreuzdiagnose (1oo2), als 1-von-3 Voter (1oo3), oder als 2-von-3 Voter (2oo3) usw. Je nach Bauweise kann so z.B. ein Fail-Safe Betrieb ermöglicht werden, bei welchem nach einem erkannten Anzeigefehler, das GUI 2A zunächst in einen sicheren Betriebsmodus mit reduzierter Funktionalität überführt wird und erst bei erkanntem Doppelfehler das GUI2A abgeschaltet wird, wie z.B. mit FIG.5B. Dementsprechend ist je nach Anforderungen auch eine zweistufige Architektur mit zwei zumindest logisch getrennten Einheiten bzw. Rechnerkomponenten 41, 42 aber nicht zwingend. Insbesondere wenn der Cursor 5 vom darstellenden Rechner 1 eingeblendet wird, ist alternativ auch eine einstufige bzw. einkanalige Ausführung mit nur einer bildverarbeitenden Stufe 41 zur sicherheitsgerichteten Prüfung der Bilddaten möglich.

Eine bevorzugte softwareimplementierte bzw. rechentechnische Funktionsweise der SMU 21 wird nun anhand von FIG.4A erläutert.

Die Prozessoranordnung 50 erhält Relativkoordinaten von der Maus 4, generiert daraus Zeigerkoordinaten und überwacht bzw. erkennt anhand der Zeigerkoordinaten, ob eine Selektion eines SEE 6 in der GUI 2A vorliegt. Sofern dies nicht vorliegt, übermittelt die Prozessoranordnung 50 Zeigerkoordinaten oder Relativkoordinaten und ggf. Interrupts zu Maustasten über den Datenkanal 11C an den PC 1. Davon ausgehend steuert der PC 1 auf herkömmliche Weise die GUI, bzw. deren Darstellung in Bilddaten für das Display 2. Alternativ können die relativen Eingabesignale der Maus 4 auch parallel an den PC 1 und die SMU 21, 21' übertragen werden.

Weiterhin steuert die Prozessoranordnung 50 den ersten FPGA 41 so, dass dieser FPGA 41 einen Cursor 5 in den Bilddaten zum Display erzeugt, z.B. durch Einblenden bzw. Überschreiben der Bilddaten entsprechend den Zeigerkoordinaten, welche die Prozessoranordnung 50 laufend ermittelt. Dabei kann vorgesehen sein, dass der PC 1 keinen Cursor 5 im GUI einblendet, oder der PC 1 diesen nur für unkritische Bereiche selbst einblendet während nur der erste FPGA 41 den Cursor 5 in kritischen Bereichen der Grafik des GUI 2A einblendet.

Optional bzw. ergänzend kann für die Sicherheit von reiner Darstellung von sicherheitskritischer Information durch einen oder beide FPGAs 41, 42 für anzeigende Überwachungsbereiche der GUI-Grafik das Prüfverfahren gemäß WO 2011/003872 A1 ausgeführt werden, wozu der SMU 21 z.B. vom Sicherheitsrechner 7 Parameter betreffend zu überwachende Bildbereiche zugeführt werden, welche reine Anzeigefunktion haben (keine Bedienelemente).

Wenn die Prozessoranordnung 50 durch Vergleich der laufend ermittelten Zeigerkoordinaten des Cursors 5 mit vorbestimmten bzw. vorgespeicherten Bildkoordinaten des bzw. der SEE 6 eines entsprechenden Überwachungsbereichs erkennt, dass eine Selektion eines SEE 6 vorliegt, dann können die FPGAs 41, 42 in einen Selektions-Überwachungsbetrieb geschaltet werden. Alternativ können die FPGAs 41, 42 eine solche Überwachung kontinuierlich bzw. laufend ausführen, jeweils insbesondere beschränkt auf jeweilige Überwachungsbereiche zu kritischen SEE 6 in der Grafik.

Zu den eingangsseitig von der SMU 21, 21' vom unsicheren PC 1 empfangenen Bilddaten erzeugt der FPGA 41 in einem ersten Funktionsblock CRC1 einen Prüfcode, durch einen geeigneten Codier-Algorithmus z.B. ein CRC-Verfahren, für diejenigen Bilddaten welche einem SEE 6 entsprechen bzw. mit diesem übereinstimmen. Der laufend generierte Code aus dem Funktionsblock CRC1 wird von der Prozessoranordnung 50 mit einem für das jeweilige von ggf. mehreren SEE 6 vorgespeicherten Referenzcode bzw. Soll-Code aus einem Speicher 55 verglichen. Dies stellt eingangsseitig sicher, dass das erwartete SEE 6 korrekt vom PC 1 dargestellt wurde, und wird von der positionsvariablen Darstellung des Cursors 5 nicht beeinflusst. Erst im Signalfluss anschließend blendet der FPGA 41 im Funktionsblock 43, an einer den aktuellen Zeigerkoordinaten entsprechenden Position, den Cursor 5 in die Bilddaten ein, z.B. durch überschreiben bzw. überblenden. Im Funktionsblock CRC2 bildet der FPGA 41 einen weiteren zeigerbezogenen Prüfcode für den Bereich der Bilddaten, welcher der aktuell eingeblendeten Darstellung des Cursors 5 entspricht. In einem weiteren Funktionsblock CRC4 bildet der FPGA 41 ferner einen "zeigerfreien" Prüfcode für einen umgebenden Bereich der Bilddaten, ohne Darstellung des Cursors 5, bspw. der Differenz des Cursor-Bereichs für CRC2 und dem Bildbereich des SEE, oder aber der Differenz des Bereichs für CRC2 und einem darüber hinaus gehenden Bereich, bis hin zur gesamten Anzeige der GUI. Zur Bildung des "zeigerfreien" Prüfcodes CRC4 wird der Prüfcode CRC4 für diejenigen Pixel berechnet, welche die Differenzmenge bzw. Restmenge der Pixel des überwachten Bildbereichs, z.B. des gesamten GUI 2A, (Menge A) und der Pixelmenge, welche den Cursor 5 darstellt (Menge B), bilden (d.h. Menge A ohne Menge B), d.h. dass die Pixel des Cursors 5 nicht in der Differenzmenge enthalten sind. Als Algorithmus für den Prüfcode kommen auch andere geeignete Verfahren, nicht nur CRC-Prüfsummen, in Betracht.

Die vom FPGA 41 durch Einblendung des Cursors 5 entsprechend modifizierten Bilddaten werden von einem Ausgang des FPGA 41 über die Bilddatenleitung 3 an das Display 2 ausgegeben. Weiterhin werden diese modifizierten Bilddaten parallel einer zweiten logischen bzw. physischen Stufe, hier einem zweiten FPGA 42 zugeführt, der anders als der FPGA 41 mit der Bilddatenleitung 3 lediglich über einen Eingang verbunden ist. Der zweite FPGA 42 überblendet, auf identische Weise wie der erste FPGA 41, entsprechend den aktuellen Zeigerkoordinaten der Prozessoranordnung 50 nochmals selbst die Darstellung des Cursors 5 mit identischen Cursor-Bilddaten, diese Bilddaten werden jedoch nicht ausgegeben. Im Funktionsblock CRC3 bildet der FPGA 42 einen weiteren zeigerbezogenen Prüfcode für den Bereich der Bilddaten, welcher der vom FPGA 42 aktuell eingeblendeten Darstellung des Cursors 5 entspricht, auf analoge Weise wie CRC2 im FPGA 41. Im Funktionsblock CRC5 bildet der FPGA 42 einen weiteren zeigerfreien Prüfcode (s. oben) für einen umgebenden Bereich der Bilddaten, ohne Darstellung des Cursors 5, d.h. für die betrachtete Differenzmenge der Pixel, entsprechend CRC 4 im FPGA 41.

Die in den Programmstufen bzw. -Blöcken CRC2, CRC3, CRC4, CRC5 berechneten Prüfcodes werden sicherheitsgerichtet von der Prozessoranordnung 50 ausgewertet und insbesondere verglichen. Hierzu vergleicht die Prozessoranordnung 50 laufend in einem Vergleicher bzw. Funktionsblock 53 die zeigerbezogenen Prüfcodes CRC2 und CRC3 miteinander, zwecks Fehlererkennung d.h. um zu prüfen und sicherzustellen, dass der Cursor 5 vom FPGA 41 korrekt eingeblendet wurde. Weiterhin vergleicht die Prozessoranordnung 50 laufend in einem Vergleicher bzw. Funktionsblock 53 die zeigerfreien Prüfcodes CRC4 und CRC5 miteinander, zwecks Fehlererkennung d.h. um zu prüfen und sicherzustellen, dass die Einblendung des Cursors 5 bzw. Modifikation der Bilddaten im FPGA 41 keine unerwünschte bzw. ungewollte Veränderung in anderen Bildbereichen der GUI hervorruft. Falls eine der Vergleichsstufen ausgehend von CRC1, CRC2 oder CRC4 eine Abweichung aufzeigt, wird die Aktivierung bzw. Freigabe der sicherheitskritischen Funktion des SEE 6 gesperrt bzw. nicht zugelassen und ggf. durch eine weitere Bilddatenmodifikation dem Benutzer ein Fehlerfall angezeigt (z.B. durch Ausblenden des SEE 6 oder dgl.). Nur bei positivem Ergebnis aller sicherheitsgerichteter Prüfungen bzw. Vergleichsergebnisse nutzt die Prozessoranordnung 50 eine, insbesondere im Zeitraum der angezeigten Selektion, erkannte benutzergesteuerte Eingabe an der sicheren CD 14 als Validierung der sicherheitsrelevanten Aktion, die dem jeweiligen SME 6 zugeordnet ist. Nur bei als korrekt überprüfter Anzeige der Selektion löst die SMU 21 diese Funktion bzw. Aktion aus, hier durch eine Ausgabe der Prozessoranordnung 50 über eine geeignete Schnittstelle zu einem sicheren System, z.B. zum Sicherheitsrechner 7 oder z.B. einer Anlagensteuerung. Die Prozessoranordnung 50 bildet einen Voter, bevorzugt einen 2oo2-Voter wie oben beschrieben, dies ist jedoch nicht zwingend.

Die zweistufige bzw. zweikanalige Architektur mit dem zweiten FPGA 42, welcher unabhängig von der Prozessoranordnung 50 gesteuert und ausgelesen wird, erlaubt dabei eine sichere Anzeige aller sicherheitsrelevanten Funktionen des GUI, insbesondere auch der Einblendung des Cursors 5 durch den ersten FPGA 41. Im Gegensatz zum PC 1 ist das Überwachungsmodul bzw. SMU 21 SIL-fähig bzw. SIL-geeignet und kann insbesondere sicherheitszertifiziert sein.

Die SMU 21' in FIG.4B hat weitestgehend identischen Aufbau und identische Funktion wie zu FIG.4A beschrieben und unterscheidet sich insbesondere dadurch, dass den beiden FPGA 41, 42 eingangsseitig unmittelbar die vom PC 1 an die SMU 21' übermittelten Bilddaten zugeführt werden, d.h. FPGA 42 nicht durch den Ausgang des FPGA 41 beinflussbar ist. Die sicherheitsgerichtete Prüffunktionen können jedoch identisch bzw. gleichwertig implementiert werden. Es wird insbesondere durch den Vergleich der Prüfcodes aus CRC2 und CRC3 auch hier sichergestellt bzw. überprüft, dass der Cursor 5 durch den FPGA 41 erwartungsgemäß angezeigt wurde. In beiden Fällen kann die Einblendung und Codierung insbesondere laufend und synchron zu den Bilddaten z.B. für jeden Bildschirm-Refresh erfolgen. Die Codierung gemäß den Stufen CRC2... CRC5 kann in beiden Ausführungsformen nur bedarfsweise dann erfolgen, wenn eine Selektion anhand der Position des Cursors 5 von Prozessoranordnung 50 erkannt wird, und ggf. eine korrekte Anzeige des SEE 6 mittels CRC1 festgestellt wurde, da beides Voraussetzung für die anschließende Validierung ist.

Als Variante zur vorstehenden Funktionsweise kann jedoch auch vorgesehen sein, dass der Cursor 5 durch den darstellenden PC 1 eingeblendet wird, insbesondere solange sich die Zeigerposition außerhalb der vorkonfigurierten grafik- bzw. pixelbezogenen Eingabe-Bereiche (EB) der vorbestimmten kritischen der SEE 6 befindet. Die SMU 21; 21' meldet z.B. mit der Übermittlung der Zeigerkoordinaten über den Kanal 11C an den PC 1 diesem zugleich, ob der der Cursor 5 auf Bildkoordinaten innerhalb oder außerhalb der EB liegt. Mit dieser Rückmeldung wird der PC1 ggf. aufgefordert den Cursor 5 auszublenden, wenn eine Selektion vorliegt (Zeigerkoordinaten innerhalb eines EB). Befinden sich die Koordinaten innerhalb eines EB, so kann die SMU 21; 21' selbst den jeweiligen EB ergänzend durch Maßnahmen visuell hervorheben, z.B. durch farbliche Umrahmung, ggf. mit Ausblenden des Cursors 5. Auch diese Betriebsweise kann durch Prüfcodes, wie oben erläutert, sicherheitsgerichtet überprüft werden. Vorteilhaft ist, wenn die Einblendung des Cursors 5 bzw. der Hervorhebung der Selektion unmittelbar durch die sichere SMU 21; 21' erfolgt, damit vom PC 1 generierte Bilddaten ohne Cursor 5 bzw. Hervorhebung auf Richtigkeit leichter überprüft werden können, insbesondere bzgl. korrekter Darstellung aller SEE bzw. EB.

FIG.5A zeigt eine weitere bevorzugte Architektur eines Überwachungsmoduls bzw. SMU 21, z.B. gemäß FIG.4A, mit einer zweikanaligen Implementierung der Voter-Anordnung bzw. Prozessoranordnung 50 durch zwei getrennte Controller bzw. Prozessoren 51, 52. Die Prozessoren 51, 52 implementieren jeweils doppelt und unabhängig alle relevanten Steuerungs- und Überprüfungsfunktionen wie vorstehend zu FIG.4A beschrieben, um für höhere Sicherheitsanforderungen bei ungleichem Verhalten einen Fehlerfall aufzudecken, und bilden einen 2-out-of-2-Voter mit den FPGAs 41, 42 als zu prüfenden Gebern. Beide Prozessoren 51, 52 sind dazu signaltechnisch jeweils mit beiden FPGAs 41, 42 verbunden und überprüfen jeweils gegenseitig und unabhängig auf bestimmungsgemäß bzw. korrekte Funktion (Zweikanal-Prinzip). Die externe Schnittstelle 61 zum relativen Zeigegerät, z.B. der Maus 4, und insbesondere zum sicheren Taster 4 kann dabei über eine getrennte Komponente ausgeführt oder in den Prozessoren 51, 52 integriert sein.

FIG.5B zeigt eine weitere, bevorzugt durchgehend zweikanalige Architektur eines Überwachungsmoduls 80. Das Überwachungsmodul 80 ist unabhängig von der vorstehend beschriebenen Funktion z.B. zur sicheren Eingabe, auch für sich genommen als Weiterentwicklung der Lehre aus WO 2011/003872 A1 zur Überwachung einer sicheren Darstellung (ggf. ohne Eingabefunktion) von Eingangsparametern verwendbar und als erfindungserheblich anzusehen.

Zu überwachende Eingabeparameter können dem Überwachungsmodul 80 über die Schnittstelle 70, z.B. von einem Sicherheitsrechner 7 zugeführt werden.

Der FPGA 41 erzeugt Prüfcodes zu einem oder mehreren grafikbezogenen, vordefinierten Überwachungsbereichen für sicherheitskritische Anzeigen. Die Prüfcodes CRC1.1 und CRC1.2, jeweils durch einen der beiden FPGAs 41 bzw. 42 ermittelt, werden in den zweikanalig implementierten Prozessoren 51, 52 jeweils unabhängig mit einem vorbestimmten Referenzwert entsprechend dem Eingabeparameter verglichen, der als Referenzwert zum jeweiligen Eingabeparameter z.B. bei einer Konfiguration vorgespeichert wurde. Der Referenzwert für den Vergleich kann als Referenzcode ausgehend von einem Eingabeparameter bestimmt werden, z.B. anhand einer Lookup-Tabelle, oder es erfolgt ein Vergleich des aktuellen Eingabeparameters mit einem aus dem ermittelten Code zurückgewonnenen Referenzparameter, z.B. per Lookup-Tabelle. Hinsichtlich der sonstigen Funktionsweise, insbesondere der Erzeugung von Prüfcodes zu Überwachungsbereichen, wird bzgl. FIG.5B auf die Lehre aus WO 2011/003872 A1 verwiesen.

Die zweistufige, vorzugsweise auch zweikanalige Hardware-Implementierung der FPGAs 41, 42 entspricht FIG.4A. Der zweite FPGA 42 ist auch hier mit der Bilddatenleitung 3 ausschließlich über einen Eingang verbunden (nur-Lese-Verbindung), d.h. kann die Bilddaten nicht verändern, während der vorgeschaltete erste FPGA 41 die Bilddaten liest (z.B. als LVDS-Empfänger) und ggf. verändert weitergeben kann (z.B. als LVDS-Sender).

Mit dem Überwachungsmodul 80 nach FIG.5B können insbesondere zwei sicherheitstechnisch vorteilhafte Funktionen implementiert werden, die höhere Sicherheitsstufen erlauben, z.B. SIL-3 oder höher.

Einerseits kann eine sicherheitsgerichtete visuelle Fehleraufdeckung durch das FPGA 41 per Bilddatenmodifikation, insbesondere durch Ausblendung bzw. Einblendung (z.B. ein Weiß-Schalten) oder sonstiges für den Benutzer sichtbares Anzeigen in den Bilddaten am Ausgang des FPGA 41, bei anhand des Prüfcode-Verfahrens erkanntem Fehler der Darstellung durch den zweiten FPGA 42 zuverlässig überprüft werden. Der FPGA 42 überprüft hierbei die im Fehlerfall erwartete grafische Fehleraufdeckung, welche der FPGA 41 erwartungsgemäß an seinem Ausgang in den Bilddaten erzeugen soll, mit einer entsprechend erwarteten Darstellung, z.B. anhand des Prüfcode-Verfahrens, durch Generieren eines Prüfcodes für die grafische Fehleranzeige. Die grafische Fehleranzeige bzw. Fehleraufdeckung kann durch den FPGA 42 überprüft werden, indem dieser hinsichtlich der Modifikation der Bilddaten zu dem als fehlerhaft erkannten Bilddaten dieselbe Funktionsweise implementiert wie der erste FPGA 41, d.h. in diesem Fall bilden auch die FPGAs 41, 42 eine zweikanalige Anordnung zur Bilddatenprüfung und -modifikation. Der FPGA 42 kann jedoch auch vorgespeicherte Codes erzeugen, die dem erwarteten bzw. Soll-Verhalten der Bildmodifikation durch den ersten FPGA 41 entsprechen, ohne selbst im FPGA 42 die Bildmodifikation redundant zu wiederholen.

Anhand der Prüfcodes aus den FPGAs 41, 42 erfolgt ein Vergleich mit einem entsprechenden Sollwert bzw. Sollcode. Dieser Vergleich erfolgt wiederum zweikanalig und unabhängig in beiden Prozessoren 51, 52 zur Erhöhung der Sicherheit. Somit wird gewährleistet, dass eine Fehleraufdeckung korrekt bzw. für den Benutzer sichtbar erfolgt. Die Fehleraufdeckung und Gegenprüfung erfolgt vorzugsweise begrenzt auf und jeweils für einzelne vordefinierte Überwachungsbereiche, sodass die restliche Anzeige unbeeinflusst bleibt. Sollte diese Gegenprüfung der Fehleraufdeckung anhand des FPGA 42 kein positives Ergebnis liefern kann eine sicherheitsgerichtete Maßnahme z.B. ein Abschalten oder Umschalten der Anzeige in einen unsicheren Modus erfolgen. Hierdurch bietet das System eine höhere Sicherheit, da zwei unterschiedliche Methoden zur Vermeidung fehlerhafter Darstellung sicherheitskritischer Information vorgesehen sind. Eine selektive Fehleraufdeckung eines einzelnen Überwachungsbereichs, z.B. durch Aus- oder Überblendung oder Markierung als fehlerhaft, anhand des ersten FPGA 41 erhöht zunächst die Verfügbarkeit, da weitere ggf. als korrekt dargestellt überprüfte sicherheitskritische Bildbereiche nicht betroffen sind. Die zweite Methode zu Gewährleistung eines Fail-Safe Betrieb wird anhand der zweiten Stufe mit dem weiteren FPGA 42, hier in Zusammenwirkung mit der Prozessoranordnung 50, erzielt. Falls die erste Methode nicht erwartungsgemäß den Fehler im überwachten Bildbereich selektiv aufdeckt, wird dies anhand des zweiten FPGA 42 aufgedeckt, sodass z.B. die gesamte Anzeige abgeschaltet werden kann durch die Voter- bzw. Prozessoranordnung 50. Auch hierzu ist ein 2oo2-Voter, wie die Prozessoranordnung vorteilhaft. Insbesondere dank dieser zwei unabhängigen Fehler-Aufdeckungsmethoden kann das Überwachungsmodul 80 die Sicherheitsstufe SIL-3 gewährleisten, da kritische Doppelfehler ausgeschlossen werden können. Zudem kann mindestens die zweite Methode im Überwachungsmodul 80 auch zweikanalig und/oder diversitär implementiert werden.

Ergänzend bzw. alternativ kann auch, zur Erhöhung der Bediensicherheit eine visuelle Hervorhebung sicherheitsrelevanter, hinsichtlich korrekter Darstellung überwachter Anzeigebereiche, welche der FPGA 41 durch Bilddatenmodifikation bestimmungsgemäß vornimmt, durch den zweiten FPGA 42 überprüft werden. Die visuelle Hervorhebung bzw. das Kenntlichmachen kann dabei auf unterschiedliche Weise erfolgen, z.B. durch Einblenden einer grafischen Umrahmung oder eines grafischen Symbols, Icons oder Widgets anhand dessen der Benutzer erkennen kann, welche Bereiche in der aktuellen Anzeige am Display 2 tatsächlich vom Überwachungsmodul 80 überwacht werden bzw. vom Überwachungsmodul 80 als sicherheitskritisch geprüft werden. Der zweite FPGA 42 kann auch hierzu für die Bilddaten am Ausgang des FPGA 41 einen Prüfcode generieren, bspw. für den Überwachungsbereich inkl. der erwarteten grafischen Hervorhebung, welcher wiederum unabhängig und ggf. zweikanalig in beiden Prozessoren 51, 52 mit einem entsprechenden Sollwert bzw. Sollcode verglichen wird. In diesem Fall können die FPGAs 41, 42 also ggf. zwei unterschiedliche Prüfcodes für jeden Überwachungsbereich bilden, einen ersten Prüfcode für die Bilddaten des Überwachungsbereichs, ohne dessen Kenntlichmachung als überwacht, und einen zweiten Prüfcode mit dieser Kenntlichmachung. Bei geeignetem Codier-Algorithmus, etwa mit großem Hamming-Abstand, wird damit zugleich eine zweikanalige Codierung in Bezug auf die ursprünglichen vom PC 1 generierten Bilddaten erzielt. In der Voter- bzw. Prozessoranordnung 50 sind für den ersten und den zweiten Prüfcode (vgl. CRC1.1 und CRC1.2) entsprechende, vorbestimmte Vergleichsdaten gespeichert, die dem Gutfall entsprechen, d.h. für die korrekte Darstellung des Eingangsparameters anhand des ersten Prüfcodes und für die korrekte Darstellung mit Hervorhebung des Überwachungsbereichs anhand des zweiten Prüfcodes. Eine auf diesem Weg vom zweiten FPGA 42 und den Prozessoren 51, 53 zuverlässig als aktiv erkannte Überwachung des jeweiligen Bildbereichs kann zudem ausgegeben werden z.B. an den Sicherheitsrechner 7.

Weiterhin kann das Überwachungsmodul 80 selbst in sicherer Weise eine visuelle Anzeige dahingehend erzeugen, in welchem Betriebsmodus das Überwachungsmodul 80 arbeitet, z.B. mit aktiver Überwachung (sicher) oder inaktiver Überwachung (nicht sicher). Auch dies kann per Bilddatenmodifikation durch das erste FPGA 41 erfolgen und anhand der vorgeschlagenen Architektur mit dem zweiten FPGA 42 und den vorzugsweise zwei Prozessoren 51, 52 sicher gegengeprüft werden. Die Statusanzeige durch das Überwachungsmodul 80 ist insbesondere vorteilhaft, wenn das GUI unterschiedliche Modi bzw. kontextabhängig verschiedene Bildschirmmasken anzeigen soll.

Anhand des Überwachungsmoduls 80 lässt sich grundsätzlich jegliche Art wünschenswerter Veränderung der vom PC 1 unsicher generierten Bilddaten in sicherer Weise durchführen. Dies wird erreicht dank der Fähigkeit zur Bilddatenmodifikation in einer ersten Stufe, z.B. im FPGA 41, und einer zweiten Stufe zur Überprüfung der Bilddatenmodifikation durch die erste Stufe z.B. mittels des zweiten FPGA 42. Beide Rechenkomponenten, die hierzu eingesetzt werden, z.B. die FPGA 41,42, können insbesondere zweikanalig auch eine Überwachungsfunktion kritischer Bilddaten realisieren wie oben beschrieben, dies ist jedoch optional.

Die zweistufige Implementierung könnte auch anhand einer einzigen integrierten Schaltung, z.B. eines einzigen FPGAs oder auch anhand eines einzigen Prozessors oder dgl. realisiert werden, mit einer logischen bzw. virtuellen Aufteilung bzw. Trennung in zweistufige Rechenkomponenten bzw. Module. Eine hardwaremäßige, echte zweikanalige Implementierung mit zwei Rechnerkomponenten, z.B. FPGAs 41, 42, ist jedoch vorteilhaft. Es können dabei diversitär verschiedene Komponententypen, z.B. FPGAs 41, 42 unterschiedlicher Bauart verwendet werden, um Risiken systematischer Fehler zu minimieren, z.B. Common-Core-Fehler. Entsprechendes gilt auch für die Prozessoren 51, 52.

Die ebenfalls zweikanalige Voter-Realisierung der Prozessoren 51, 52 ist zur höheren Sicherheit vorzugsweise durch Isolierkomponenten galvanisch von den FPGAs 41, 42 getrennt, sodass ein physisch getrennter Prozessorbereich 50 auf einer gemeinsamen Leiterkarte des Überwachungsmoduls 80 bereitgestellt wird.

Eine vollständig zweikanalige Architektur des Überwachungsmoduls 80, mit zwei Rechnerkomponenten 41, 42 zur Bilddatencodierung, welche zu Prüfzwecken identische Funktion(en) zur Bilddatenmodifikation - z.B. wie oben erläutert - implementieren, und zwei Prozessoren 51, 52 zur Funktionskontrolle und -Steuerung ist grundsätzlich hinsichtlich Fehlerbeherrschung und Fehleraufdeckung besonders vorteilhaft. Vorzugsweise haben zumindest beide Prozessoren 51, 52 jeweils unabhängige oder zumindest rückwirkungsfreie Ressourcen wie Spannungsversorgung, Clock, Signalpfade usw.

FIG.6 zeigt schematisch ein sicheres Displaygerät 60 zur Anzeige von Pixelgrafik, insbesondere mit einem TFT-Panel, mit einer in das Gerät integrierten SMU 21, z.B. nach FIG.4A. Rechnergenerierte Bilddaten werden, ggf. nach Umwandlung von einem für PC-Displays üblichen Signalformat, wie z.B. HDMI, in LVDS durch einen vorhandenen Monitor-Controller, zur SMU 21 geleitet und von dieser an den TFT-Controller des Displaygeräts 60 ausgegeben.

Das Displaygerät 60 hat weiterhin ein integriertes, spezielles Schnittstellenmodul bzw. ein Gateway 61, das über eine bidirektionale Daten-Verbindung mit der SMU 21 verbunden ist, sodass nur ein Anschluss hierfür an der SMU 21 erforderlich ist und das Gateway 61 anwendungsabhängig konfigurierbar ist.

Das Gateway 61 hat in FIG.6 einen Anschluss, z.B. einen USB-Anschluss, für ein COTS-Eingabegerät 4 sowie einen entsprechenden Ausgang zur Verbindung mit dem darstellenden, nicht sicheren PC 1 (nicht gezeigt in FIG.6), über welchen die Relativkoordinaten an den PC 1 weitergeleitet werden um ein GUI zu steuern bzw. den PC 1 zu bedienen. Parallel liefert das Gateway 61 die Relativkoordinaten an die SMU 21, insbesondere zwecks Einblendung des Cursors 5 wie vorstehend beschrieben. Das Gateway 61 hat einen Eingang für die Bestätigungsvorrichtung bzw. CD 14 und stellt u.a. einen logisch sicheren Kanal zwischen der Bestätigungsvorrichtung 14 und der SMU 21. Ferner stellt das Gateway 61 eine Schnittstelle zur sicherheitsgerichteten Kommunikation über einen sicheren Industrie-Bus bereit, wie z.B. PROFINET oder nach dem PROFIsafe Protokoll, insbesondere zwecks Übermittlung sicherheitsgerichteter Befehle bzw. Informationen, welche die SMU 21 selbst generiert, z.B. ausgehend von einer Bestätigungseingabe am CD 14 oder auch z.B. sicherheitsgerichtete Befehle.

Die SMU 21 kann neben der erfindungsgemäß sicheren Eingabefunktion auch eine sichere Darstellung nach dem Prinzip aus WO 2011/003872 A1 und/oder sichere Eingabe mittels eines Absolut-Eingabegeräts, z.B. eines kapazitiven Touch gemäß EP 2 551 787 B1, realisieren.

## Patentansprüche

1. Überwachungseinheit (21) zum Überwachen einer grafischen Benutzeroberfläche, umfassend
- eine digitale Bilddatenschnittstelle zur Verbindung mit einer Bilddatenleitung (3) für die Übertragung rechnergenerierter Bilddaten von einem Rechner (1) an ein Display (2), insbesondere eine LVDS-Schnittstelle, eine HDMI-Schnittstelle oder dgl.;
- mindestens eine Rechenkomponente (41; 42) welche eine Sicherheitsfunktion implementiert und zumindest Teile der Bilddaten über die Bilddatenschnittstelle ausliest;
**dadurch gekennzeichnet, dass**
die Überwachungseinheit (21) eine zweistufige Rechnerarchitektur aufweist mit
- einer ersten Rechenkomponente (41), welche eingerichtet ist um eingangsseitig rechnergenerierte Bilddaten zu erhalten und abhängig von einer Sicherheitsfunktion zumindest einen Teil der Bilddaten zu modifizieren, die zur Anzeige in einem vorbestimmten Bildbereich bestimmt sind, sowie ausgangsseitig Bilddaten für ein Display (2) bereitzustellen, und mit
- einer zweiten Rechenkomponente (42), welche eingerichtet ist um von der ersten Rechenkomponente (41) bereitgestellte Bilddaten zu überprüfen, durch Berechnung eines Prüfcodes für Bilddaten, welche zur Anzeige in dem vorbestimmten Bildbereich bestimmt sind, und
- dass die Überwachungseinheit (21) eingerichtet ist, berechnete Prüfcodes mit jeweils mindestens einem vorgespeicherten Referenzcode zu vergleichen, insbesondere zwecks Überprüfung einer bestimmungsgemäßen Modifikation der Bilddaten, wie z.B. einer bestimmungsgemäßen Hervorhebung, durch die erste Rechenkomponente und/oder zwecks Veranlassung einer sicherheitsgerichteten Reaktion.

2. Überwachungseinheit nach Anspruch 1, **dadurch gekennzeichnet, dass**
die erste Rechenkomponente (41) konfiguriert ist um zu rechnergenerierten Bilddaten, welche zur Anzeige in einem Überwachungsbereich bestimmt sind, einen Prüfcode zu berechnen für einen sicherheitsgerichteten Vergleich mit mindestens einem vorgespeicherten Referenzwert für den Überwachungsbereich, wobei die erste Rechenkomponente zuerst eingangsseitig Prüfcodes (CRC1) zu rechnergenerierten Bilddaten berechnet und daran anschließend in einer zweiten Stufe (43) Bilddaten modifiziert.

3. Überwachungseinheit nach Anspruch 1 oder 2, **dadurch gekennzeichnet, dass**
die erste und zweite Rechenkomponente (41; 42) durch zwei getrennte integrierte Schaltungen, wie FPGA, ASIC oder dgl., insbesondere unterschiedlicher Bauart, implementiert sind; und/oder die erste und zweite Rechenkomponente (41; 42) durch zwei getrennte Prozessoren, insbesondere Mikroprozessoren oder dgl., insbesondere unterschiedlicher Bauart, implementiert sind; und/oder die erste und zweite Rechenkomponente (41; 42) eine zweikanalige Rechnerarchitektur bilden.

4. Überwachungseinheit nach Anspruch 1, 2 oder 3, **dadurch gekennzeichnet, dass** die mindestens eine Rechenkomponente (41; 42) mit Sicherheitsfunktion, insbesondere die erste und zweite Rechenkomponente, zu ausgewählten Bildbereichen jeweils rechentechnisch Prüfcodes (CRC1; CRC1.1, CRC1.2) generiert bzw. generieren, und mit der bzw. den Rechenkomponenten eine Prozessoranordnung (50) verbunden ist zum Vergleich der generierten Prüfcodes mit vorgespeicherten Referenzdaten.

5. Überwachungseinheit nach Anspruch 4, **dadurch gekennzeichnet, dass** die Prozessoranordnung (50) eine Voter-Anordnung ist, welche als zweikanalige Prozessor-Schaltung (51; 52) realisiert ist, vorzugsweise als 2oo2-Voter.

6. Überwachungseinheit nach einem der Ansprüche 1 bis 4, **dadurch gekennzeichnet, dass** die zweite Rechenkomponente (42), eingerichtet ist um eingangsseitig Bilddaten zu erhalten und abhängig von einer Sicherheitsfunktion, zumindest einen Teil der Bilddaten in identischer Weise wie die erste Rechnerkompente (41) redundant zu modifizieren, und die erste Rechenkomponente eingerichtet ist, um zu den modifizierten Bilddaten einen ersten Prüfcode (CRC2) zu berechnen und die zweite Rechenkomponente (42) eingerichtet ist, um zu den redundant modifizierten Bilddaten einen zweiten Prüfcode (CRC3) zu generieren, wobei die Überwachungseinheit den ersten und den zweiten Prüfcode vergleicht.

7. Überwachungseinheit nach Anspruch 5 und 6, wobei die Voter-Anordnung (51; 52) den ersten Prüfcode (CRC2) und den zweiten Prüfcode (CRC3) vergleicht.

8. Überwachungseinheit nach einem der Ansprüche 1 bis 7, **dadurch gekennzeichnet, dass** diese eine Geräteschnittstelle (61) für Eingabeinformation, insbesondere ausgehend von einem Eingabegerät (4), insbesondere einem Zeigegerät (4), zur benutzergesteuerten Selektion eines grafischen Bedienelements (6), umfasst; und dass
- die Überwachungseinheit (21) einen physischen Bestätigungs-Eingang (11B) für eine sichere Bestätigungsvorrichtung (14) aufweist, und
- die mindestens eine Rechenkomponente (41; 42) eingerichtet ist um sicherzustellen und/oder zu überprüfen, dass eine erkannte Selektion des Bedienelements (6) korrekt in dem Display (2) zugeführten Bilddaten dargestellt ist; und
- die Überwachungseinheit (21) eingerichtet ist um bei Empfang einer Bestätigungseingabe über die Bestätigungs-Schnittstelle (11B) während einer dargestellten Selektion des Bedienelements (6) einen zugeordneten sicherheitsrelevanten Bedienbefehl auszugeben, insbesondere über eine Sicherheits-Schnittstelle (70) .

9. Überwachungseinheit nach Anspruch 8, **dadurch gekennzeichnet, dass**
- die mindestens eine Rechenkomponente (41; 42) zur Bilddatenmodifikation und/oder zur Berechnung von Prüfcodes aus den Bilddaten eingerichtet ist;
- die Überwachungseinheit mindestens einen Speicher (55) für die Vorgabe vorbestimmter Bildbereiche und/oder Referenzcodes aufweist und/oder
- die Überwachungseinheit eine Controllerkomponente (51) für ein Eingabegerät aufweist, welche mit der Geräteschnittstelle (61) verbunden ist zum unmittelbaren Anschluss eines Eingabegeräts, insbesondere einer Computermaus (4), an die Überwachungseinheit (21), wobei die Überwachungseinheit vorzugsweise eine Datenschnittstelle (11C), insbesondere eine bidirektionale Datenschnittstelle, zum Übertragen von Eingabeinformation an einen Rechner aufweist.

10. Überwachungseinheit nach einem der Ansprüche 1 bis 9, **dadurch gekennzeichnet, dass**
ein Modul zur sicherheitsgerichteten Kommunikation über eine Bus-Schnittstelle (61) als Sicherheits-Schnittstelle zur Ausgabe von sicherheitsrelevanten Bedienbefehlen mit der Überwachungseinheit (21) verbunden bzw. in diese integriert ist.

11. System für eine sicherheitsrelevante Eingabe an einer grafischen Benutzeroberfläche, umfassend einen Rechner (1) und ein mit diesem über eine Bilddatenleitung verbundenes Display (2) für Pixelgrafik, **gekennzeichnet durch**
eine vom Rechner physisch getrennte Überwachungseinheit (21) nach einem der Ansprüche 1 bis 10, wobei
- ein Eingabegerät, insbesondere eine Computermaus (4), zum Bedienen einer Benutzeroberfläche unmittelbar an die Geräteschnittstelle (61) der Überwachungseinheit (21) angeschlossen ist; und
- eine separate sichere Bestätigungsvorrichtung (14), insbesondere ein Sicherheitstaster an den physischen Bestätigungs-Eingang (11B) der Überwachungseinheit (21) angeschlossen ist.

12. Displaygerät (60) zur Anzeige von Pixelgrafik, insbesondere mit einem TFT-Panel (2), **gekennzeichnet durch** eine in das Gerät integrierte Überwachungseinheit (21) nach einem der Ansprüche 1 bis 10.

13. Displaygerät (60) nach Anspruch 12 **gekennzeichnet durch** zumindest einen mit einer Geräteschnittstelle (61) der Überwachungseinheit (21) verbunden Anschluss für ein Eingabegerät (4) sowie einen mit einem Bestätigungs-Eingang der Überwachungseinheit (21) verbundenen Anschluss für eine sichere Bestätigungsvorrichtung (14).

14. Führerstand eines schienengebundenen Triebfahrzeugs umfassend ein DMI, **gekennzeichnet durch** eine in das DMI integrierte Überwachungseinheit nach einem der Ansprüche 1 bis 10.

15. Verwendung einer Überwachungseinheit (21) nach einem der Ansprüche 1 bis 10 zur selektiven Fehleraufdeckung in einem kritischen Bildbereich und/oder zur Kenntlichmachung von sicherheitskritischen, überwachten Bereichen in einer grafischen Benutzeroberfläche.

## Claims

1. Monitoring unit (21) for monitoring a graphical user interface, comprising
- a digital image data interface for connection to an image data line (3) for the transmission of computer-generated image data from a computer (1) to a display (2), in particular an LVDS interface, an HDMI interface or the like;
- at least one computing component (41; 42) which implements a safety function and reads out at least parts of the image data via the image data interface;
**characterized in that**
the monitoring unit (21) has a two-stage computing architecture with
- a first computing component (41), which is configured to receive computer-generated image data on an input side, and modify at least part of the image data depending on a safety function, which are intended to be displayed in a predetermined image area, and to provide image data on an output side for a display (2), and with
- a second computing component (42) configured to check image data provided by the first computing component (41) by calculating a check code for image data intended to be displayed in the predetermined image area, and
- **in that** the monitoring unit (21) is configured to compare calculated check codes respectively with at least one prestored reference code, in particular for the purpose of checking an intended modification of the image data, such as an intended highlighting, by the first computing component and/or for the purpose of inducing a safety-oriented reaction.

2. Monitoring unit according to claim 1, **characterized in that** the first computing component (41) is configured to compute a check code, for computer-generated image data intended for display in a monitoring area, for a safety-related comparison with at least a pre-stored reference value for the monitoring area, wherein the first computing component calculates check codes (CRC1) at first on the input side for computer-generated image data and then in a second stage (43) modifies the image data.

3. Monitoring unit according to claim 1 or 2, **characterized in that** the first and second computing components (41; 42) are implemented by two separate integrated circuits, such as FPGA, ASIC or the like, in particular of different design; and/or the first and second computing components (41; 42) are implemented by two separate processors, in particular microprocessors or the like, in particular of different designs; and/or the first and second computing components (41; 42) form a two-channel computer architecture.

4. Monitoring unit according to claim 1, 2 or 3, **characterized in that** the at least one computing component (41; 42) with a safety function, in particular the first and second computing components, computationally generates resp. generate check codes (CRC1; CRC1.1, CRC1.2) for selected image areas in each case, and is connected to the computing component(s) of a processor arrangement (50) for comparing the generated check codes with pre-stored reference data.

5. Monitoring unit according to claim 4, **characterized in that** the processor arrangement (50) is a voter arrangement which is realized as a two-channel processor circuit (51; 52), preferably as a 2oo2-voter.

6. Monitoring unit according to any one of the claims 1 to 4, **characterized in that** the second computing component (42) is configured to receive image data on the input side and, depending on a safety function, to redundantly modify at least part of the image data in an identical manner to the first computing component (41), and the first computing component is configured to calculate a first check code (CRC2) for the modified image data and the second computing component (42) is configured to generate a second check code (CRC3) for the redundantly modified image data, wherein the monitoring unit compares the first and the second check code.

7. A monitoring unit according to claim 5 and 6, wherein the voter arrangement (51; 52) compares the first check code (CRC2) and the second check code (CRC3).

8. Monitoring unit according to one of claims 1 to 7, **characterized in that** it comprises a device interface (61) for input information, in particular starting from an input device (4), in particular a pointing device (4), for user-controlled selection of a graphical control element (6); and **in that**
- the monitoring unit (21) comprises a physical confirmation input (11B) for a safe confirmation device (14), and
- the at least one computing component (41; 42) is configured to ensure and/or verify that a detected selection of the control element (6) is correctly represented in image data supplied to the display (2); and
- the monitoring unit (21) configured to output an associated safety-relevant operating command, in particular via a safety interface (70), upon receipt of a confirmation input via the confirmation interface (11B) during a represented selection of the operating element (6).

9. Monitoring unit according to claim 8, **characterized in that**
- the at least one computing component (41; 42) is configured for image data modification and/or for calculating check codes from the image data;
- the monitoring unit has at least one memory (55) for presetting predetermined image areas and/or reference codes, and/or
- the monitoring unit has a controller component (51) for an input device, which is connected to the device interface (61) for direct connection of an input device, in particular a computer mouse (4), to the monitoring unit (21), the monitoring unit preferably having a data interface (11C), in particular a bidirectional data interface, for transmitting input information to a computer.

10. Monitoring unit according to any one of claims 1 to 9, **characterized in that**
a module for safety-related communication is connected to or integrated in the monitoring unit (21) via a bus interface (61) as a safety interface for outputting safety-related operating commands.

11. System for a safety-relevant input at a graphical user interface, comprising a computer (1) and a display (2) for pixel graphics connected thereto via an image data line, **characterized by**
a monitoring unit (21) physically separated from the computer according to any one of claims 1 to 10, wherein
- an input device, in particular a computer mouse (4), for operating a user interface is directly connected to the device interface (61) of the monitoring unit (21); and
- a separate safe confirmation device (14), in particular a safety button, is connected to the physical confirmation input (11B) of the monitoring unit (21).

12. Display device (60) for displaying pixel graphics, in particular with a TFT panel (2), **characterized by** a monitoring unit (21) integrated in the device according to any one of claims 1 to 10.

13. Display device (60) according to claim 12, **characterized by** at least one connection for an input device (4) connected to a device interface (61) of the monitoring unit (21) and a connection for a safe confirmation device (14) connected to a confirmation input of the monitoring unit (21).

14. Driver's cab of a rail-bound traction unit comprising a DMI, **characterized by** a monitoring unit integrated in the DMI according to any one of claims 1 to 10.

15. Use of a monitoring unit (21) according to any one of claims 1 to 10 for selective fault detection in a critical image area and/or for highlighting safety-critical monitored areas in a graphical user interface.

## Revendications

1. Unité de surveillance (21) pour surveiller une interface utilisateur graphique, comprenant
- une interface de données d'image numérique pour la connexion à une ligne de données d'image (3) pour la transmission de données d'image générées par ordinateur d'un ordinateur (1) à un affichage (2), en particulier une interface LVDS, une interface HDMI ou similaire;
- au moins un composant de calcul (41; 42) qui met en oeuvre une fonction de sécurité et lit au moins des parties des données d'image via l'interface de données d'image;
**caractérisée en ce que**
l'unité de surveillance (21) présente une architecture informatique à deux étages avec
- un premier composant de calcul (41) qui est configuré pour recevoir des données d'image générées par ordinateur sur le côté entrée et, en fonction d'une fonction de sécurité, pour modifier au moins une partie des données d'image qui sont destinées à être affichées dans une zone d'image prédéterminée, et pour fournir des données d'image pour un affichage (2) sur le côté sortie, et avec
- un deuxième composant de calcul (42) qui est agencé pour vérifier des données d'image fournies par le premier composant informatique (41) en calculant un code de vérification pour des données d'image qui sont destinées à être affichées dans la zone d'image prédéterminée, et
- **en ce que** l'unité de surveillance (21) est conçue pour comparer des codes de contrôle calculés avec respectivement au moins un code de référence préstocké, en particulier pour vérifier une modification comme prévue des données d'image, telle qu'une mise en évidence comme prévue, par le premier composant de calcul et/ou pour inciter une réaction de sécurité.

2. Unité de surveillance selon la revendication 1, **caractérisée en ce que**
le premier composant de calcul (41) est configuré pour calculer un code de contrôle pour des données d'image générées par ordinateur, qui sont destinées à être affichées dans une zone de surveillance, pour une comparaison de manière visant la sécurité avec au moins une valeur de référence préstockée pour la zone de surveillance, le premier composant de calcul calculant d'abord des codes de contrôle (CRC1) pour des données d'image générées par ordinateur du côté de l'entrée et modifiant ensuite les données d'image dans une deuxième étape (43).

3. Unité de surveillance selon la revendication 1 ou 2, **caractérisée en ce que**
les premier et deuxième composants de calcul (41; 42) sont mis en oeuvre par deux circuits intégrés séparés, tels que FPGA, ASIC ou similaires, en particulier de conceptions différentes;
et/ou les premier et deuxième composants de calcul (41; 42) sont mis en oeuvre par deux processeurs séparés, en particulier des microprocesseurs ou similaires, en particulier de conceptions différentes; et/ou les premier et deuxième composants de calcul (41; 42) forment une architecture d'ordinateur à deux canaux.

4. Unité de surveillance selon la revendication 1, 2 ou 3, **caractérisée en ce que**
ledit au moins un composant de calcul (41; 42) avec une fonction de sécurité, en particulier le premier et le deuxième composant de calcul, génère ou génèrent chaque fois de manière informatisée des codes de contrôle (CRC1; CRC2; CRC1.2) pour des zones d'image sélectionnées, et un agencement de processeur (50) est relié au(x) composant(s) de calcul pour comparer les codes de contrôle générés avec des données de référence préstockées.

5. Unité de surveillance selon la revendication 4, **caractérisée en ce que** l'agencement de processeur (50) est un dispositif voteur qui est mis en oeuvre comme un circuit de processeur à deux canaux (51; 52), de préférence comme un voteur 2oo2.

6. Unité de surveillance selon l'une quelconque des revendications 1 à 4, **caractérisée en ce que** le deuxième composant de calcul (42) est configuré pour recevoir des données d'image côté entrée et, en fonction d'une fonction de sécurité, pour modifier de manière redondante au moins une partie des données d'image de manière identique au premier composant informatique (41), et le premier composant de calcul est configuré pour calculer un premier code de contrôle (CRC2) pour les données d'image modifiées, et le second composant de calcul est configuré pour générer de manière redondante un second code de contrôle (CRC3) pour les données d'image modifiées, l'unité de surveillance comparant le premier et le second code de contrôle.

7. Unité de surveillance selon les revendications 5 et 6, dans laquelle le dispositif voteur (51; 52) compare le premier code de contrôle (CRC2) et le second code de contrôle (CRC3).

8. Unité de surveillance selon l'une quelconque des revendications 1 à 7, **caractérisée en ce qu'**elle comprend une interface de dispositif (61) pour l'entrée d'informations, en particulier à partir d'un dispositif d'entrée (4), en particulier un dispositif de pointage (4), pour la sélection commandée par l'utilisateur d'un élément de commande graphique (6); et **en ce que**
- l'unité de surveillance (21) possède une entrée d'actionnement physique (11B) pour un dispositif d'actionnement sûr (14), et
- l'au moins un composant de calcul (41; 42) est agencé pour assurer et/ou vérifier qu'une sélection détectée de l'élément de commande (6) est correctement représentée dans les données d'image fournies à l'affichage (2); et
- l'unité de surveillance (21) est conçue pour délivrer une instruction de commande associée, importante pour la sécurité, en particulier par l'intermédiaire d'une interface de sécurité (70), à la réception d'une entrée de confirmation par l'intermédiaire de l'interface de commande (11B) lors d'une sélection affichée de l'élément de commande (6).

9. Unité de surveillance selon la revendication 8, **caractérisée en ce que**
- l'au moins un composant de calcul (41; 42) est configuré pour modifier les données d'image et/ou pour calculer des codes de contrôle à partir des données d'image;
- l'unité de surveillance possède au moins une mémoire (55) pour prédéterminer des zones d'image et/ou des codes de référence prédéterminés, et/ou
- l'unité de surveillance comporte un composant controlêur (51) pour un dispositif d'entrée, qui est relié à l'interface de dispositif (61) pour le raccordement direct d'un dispositif d'entrée, notamment une souris d'ordinateur (4), à l'unité de surveillance (21), l'unité de surveillance comportant de préférence une interface de données (11C), notamment une interface de données bidirectionnelle, pour la transmission d'informations d'entrée à un ordinateur.

10. Unité de surveillance selon l'une des revendications 1 à 9, **caractérisée en ce que**
un module pour la communication visant la sécurité est relié à l'unité de surveillance (21) ou intégré dans celle-ci par l'intermédiaire d'une interface de bus (61) en tant qu'interface de sécurité pour l'émission d'ordres de commande de sécurité.

11. Système pour une entrée de sécurité au niveau d'une interface utilisateur graphique, comprenant un ordinateur (1) et un affichage (2) pour des graphiques en pixels connecté à celui-ci via une ligne de données d'image, **caractérisé par** une unité de surveillance (21) physiquement séparée de l'ordinateur selon l'une des revendications 1 à 10, dans lequel
- un dispositif d'entrée, en particulier une souris d'ordinateur (4), pour l'utilisation d'une interface utilisateur est directement connecté à l'interface de dispositif (61) de l'unité de surveillance (21); et
- un dispositif de confirmation sécurisé séparé (14), en particulier un bouton de sécurité, est connecté à l'entrée d'actionnement physique (11B) de l'unité de surveillance (21).

12. Dispositif d'affichage (60) pour l'affichage de graphiques en pixels, en particulier avec un panneau TFT (2), **caractérisé par** une unité de surveillance (21) intégrée dans le dispositif selon l'une des revendications 1 à 10.

13. Dispositif d'affichage (60) selon la revendication 12, **caractérisé par** au moins une connexion pour un dispositif d'entrée (4) connecté à une interface de dispositif (61) de l'unité de surveillance (21) ainsi qu'une connexion pour un dispositif de confirmation sécurisé (14) connecté à une entrée de confirmation de l'unité de surveillance (21).

14. Cabine de conduite d'un engin de traction sur rail comprenant un DMI, **caractérisée par** une unité de surveillance intégrée dans le DMI selon l'une quelconque des revendications 1 à 10.

15. Utilisation d'une unité de surveillance (21) selon l'une quelconque des revendications 1 à 10 pour la détection sélective de défauts dans une zone d'image critique et/ou pour la mise en évidence de zones surveillées critiques pour la sécurité dans une interface utilisateur graphique.
